# EUROPEAN PATENT APPLICATION

(11) **EP 4 842 127 A1**
(43) Date of publication of application: **18.11.2026**
(21) Application number: 25738479.2
(22) Date of filing: 09.01.2025
(51) Int. Cl.: H04W 74/00

(54) **METHOD AND APPARATUS FOR TRIGGERING CELL TO SEND SSB AND/OR SIB, AND DEVICE**

(30) Priority: 12.01.2024 CN 202410055214
(71) Applicant: Vivo Mobile Communication Co., Ltd., Dongguan, Guangdong 523863 (CN)
(72) Inventor: JIANG, Lu, Dongguan, Guangdong 523863 (CN); LI, Gen, Dongguan, Guangdong 523863 (CN); CHEN, Xiaohang, Dongguan, Guangdong 523863 (CN)
(74) Representative: Conti, Marco
(86) International application number: PCT/CN2025/071397
(87) International publication number: WO 2025/148950

(57) **Abstract**

This application discloses a method and an apparatus for triggering a cell to send an SSB and/or a SIB, and a device, pertaining to the field of communication technologies. The method of embodiments of this application includes: sending, by a terminal, a first signal to a second cell; and performing, by the terminal, a target operation based on first information from a first cell and/or the second cell; where the first signal is used for triggering the second cell to perform an adaptation related to a synchronization signal block SSB and/or a system information block SIB, and the first cell and the second cell are different cells.

## Description

### CROSS-REFERENCE TO RELATED APPLICATIONS

This application claims priority to Chinese Patent Application No. 202410055214.2, filed in China on January 12, 2024, which is incorporated herein by reference in its entirety.

### TECHNICAL FIELD

This application pertains to the field of communications technologies, and specifically relates to a method and an apparatus for triggering a cell to send an SSB and/or a SIB, and a device.

### BACKGROUND

In the related art, when the network side sends a synchronization signal block (Synchronization Signal Block, SSB), a terminal calculates a position of control resource set 0 (Control Resource Set 0, CORESET 0) based on an SSB subcarrier offset (ssb-SubcarrierOffset) included in a master information block (Master Information Block, MIB) of a physical broadcast channel (Physical broadcast channel, PBCH) carried in the SSB and other parameters, and then blindly detects scheduling information for remaining minimum system information (Remaining Minimum SI, RMSI) by using a system information radio network temporary identifier (System Information Radio Network Temporary Identifier, SI-RNTI) in a type 0 (Type 0) common search space (Common Search Space, CSS) corresponding to CORESET 0. However, in an on-demand SIB (on-demand SIB) scenario, for energy saving, a SIB may not be sent; therefore, in an energy-saving scenario, the terminal does not need to blindly detect scheduling information for SIB.

For a solution in which a terminal sends an uplink signal to trigger an energy-saving cell (cell) to send a system information block (System Information Block, SIB), behaviors of the terminal after sending of the uplink signal and behaviors of the network side after receiving of the signal are not yet defined, so the terminal may not be able to accurately receive an SSB and/or a SIB.

### SUMMARY

Embodiments of this application provide a method and an apparatus for triggering a cell to send an SSB and/or a SIB, and a device, to solve the problem that a terminal cannot accurately receive an SSB and/or a SIB.

According to a first aspect, a method for triggering a cell to send an SSB and/or a SIB is provided, where the method is performed by a terminal and includes:
sending, by a terminal, a first signal to a second cell; and
performing, by the terminal, a target operation based on first information from a first cell and/or the second cell; where
the first signal is used for triggering the second cell to perform an adaptation related to a synchronization signal block SSB and/or a system information block SIB, and the first cell and the second cell are different cells; and
the target operation includes at least one of the following:
   receiving, at a first position, an SSB and/or SIB sent by the second cell, where the first position is determined based on the first information or specified by a protocol;
   receiving, in a first direction, an SSB and/or SIB sent by the second cell, where the first direction is a direction corresponding to an SSB index carried in feedback information of the first signal;
   receiving, in a second direction, an SSB and/or SIB sent by the second cell, where the second direction is a direction corresponding to an SSB associated with an occasion at which the first signal is sent;
   starting to monitor a type 0 physical downlink control channel (Physical downlink control channel, PDCCH) associated with a target SSB, where the target SSB is an SSB associated with a random access occasion (Random Access Channel Occasion, RO) at which the first signal is sent;
   blindly detecting scheduling information for remaining minimum system information (Remaining Minimum SI, RMSI) using a system information radio network temporary identifier SI-RNTI in a type 0 (Type 0) common search space (Common Search Space, CSS) corresponding to a control resource set 0 (CORESET 0);
   blindly detecting downlink control information (Downlink Control Information 1_0, DCI 1_0) in a Type 0 CSS corresponding to a control resource set 0;
   receiving feedback information of the first signal at a second position, where the second position is determined according to a configuration of the first signal or specified by a protocol;
   skipping detection of DCI scrambled by a random access RNTI;
   detecting DCI scrambled by a random access RNTI;
   resending the first signal under a first condition, where the first condition includes: the terminal does not receive, within a random access response (Random Access Response, RAR) time window, a second message Msg2 for contention-based random access;
   after receiving a physical downlink shared channel (Physical downlink shared channel, PDSCH) carrying a RAR message, not sending a physical uplink shared channel (Physical Uplink Shared Channel, PUSCH) transmission scheduled by an RAR uplink grant;
   after receiving Msg2, not sending a third message Msg3 for contention-based random access;
   receiving an on-demand SIB in a type 1 CSS;
   receiving an on-demand SIB in a target search space, where the target search space is a search space dedicated to receiving the on-demand SIB;
   determining validity of an RO of the second cell according to time division duplex (Time Division Duplex, TDD) configuration information of the second cell, where the TDD configuration information is from the first cell; and
   determining a valid uplink occasion for sending the first signal according to TDD configuration information of the second cell, where the TDD configuration information is from the first cell.

According to a second aspect, a method for triggering a cell to send an SSB and/or a SIB is provided, where the method is performed by a second cell and includes:
receiving, by a second cell, a first signal sent by a terminal; where the first signal is used for triggering the second cell to perform adaptation related to an SSB and/or a SIB; and
performing, by the second cell, adaptation related to the SSB and/or the SIB.

According to a third aspect, a method for triggering a cell to send an SSB and/or a SIB is provided, where the method is performed by a first cell and includes:
sending, by a first cell, first information to a terminal, where the first information is used for the terminal to perform a target operation after sending a first signal to a second cell; and the first signal is used for triggering the second cell to perform adaptation related to a synchronization signal block SSB and/or a system information block SIB.

According to a fourth aspect, an apparatus for triggering a cell to send an SSB and/or a SIB is provided, applied to a terminal and including:
a first transceiver unit, configured to send a first signal to a second cell; and
a first processing unit, configured to perform a target operation based on first information from a first cell and/or the second cell; where
the first signal is used for triggering the second cell to perform an adaptation related to an SSB and/or a SIB, and the first cell and the second cell are different cells; and
the target operation includes at least one of the following:
   receiving, at a first position, an SSB and/or SIB sent by the second cell, where the first position is determined based on the first information or specified by a protocol;
   receiving, in a first direction, an SSB and/or SIB sent by the second cell, where the first direction is a direction corresponding to an SSB index carried in feedback information of the first signal;
   receiving, in a second direction, an SSB and/or SIB sent by the second cell, where the second direction is a direction corresponding to an SSB associated with an occasion at which the first signal is sent;
   starting to monitor a type 0 PDCCH associated with a target SSB, where the target SSB is an SSB associated with a RO at which the first signal is sent;
   blindly detecting scheduling information for RMSI using a SI-RNTI in a Type 0 CSS corresponding to a control resource set 0;
   blindly detecting DCI 1_0 in a Type 0 CSS corresponding to a control resource set 0;
   receiving feedback information of the first signal at a second position, where the second position is determined according to a configuration of the first signal or specified by a protocol;
   skipping detection of DCI scrambled by a random access RNTI;
   detecting DCI scrambled by a random access RNTI;
   resending the first signal under a first condition, where the first condition includes: the terminal does not receive, within a RAR time window, a second message Msg2 for contention-based random access;
   after receiving a PDSCH carrying a RAR message, not sending a PUSCH transmission scheduled by an RAR uplink grant;
   after receiving Msg2, not sending a third message Msg3 for contention-based random access;
   receiving an on-demand SIB in a type 1 CSS;
   receiving an on-demand SIB in a target search space, where the target search space is a search space dedicated to receiving the on-demand SIB;
   determining validity of an RO of the second cell according to time division duplex TDD configuration information of the second cell, where the TDD configuration information is from the first cell; and
   determining a valid uplink occasion for sending the first signal according to TDD configuration information of the second cell, where the TDD configuration information is from the first cell.

According to a fifth aspect, an apparatus for triggering a cell to send an SSB and/or a SIB is provided, applied to a second cell and including:
a second transceiver unit, configured to receive a first signal sent by a terminal; where the first signal is used for triggering the second cell to perform adaptation related to an SSB and/or a SIB; and
a second processing unit, configured to perform adaptation related to the SSB and/or the SIB.

According to a sixth aspect, an apparatus for triggering a cell to send an SSB and/or a SIB is provided, applied to a first cell and including:
a fifth transceiver unit, configured to send first information to a terminal, where the first information is used for the terminal to perform a target operation after sending a first signal to a second cell; the first signal is used for triggering the second cell to perform adaptation related to a synchronization signal block SSB and/or a system information block SIB.

According to a seventh aspect, a terminal is provided, where the terminal includes a processor and a memory, where a program or instructions capable of running on the processor are stored in the memory. When the program or the instructions are executed by the processor, the steps of the method according to the first aspect are implemented.

According to an eighth aspect, a terminal is provided, including a processor and a communication interface, where the communication interface is configured to send a first signal to a second cell; and the processor is configured to perform a target operation based on first information from a first cell and/or the second cell; where the first signal is used for triggering the second cell to perform an adaptation related to a synchronization signal block SSB and/or a system information block SIB, and the first cell and the second cell are different cells; and
the target operation includes at least one of the following:
receiving, at a first position, an SSB and/or SIB sent by the second cell, where the first position is determined based on the first information or specified by a protocol;
receiving, in a first direction, an SSB and/or SIB sent by the second cell, where the first direction is a direction corresponding to an SSB index carried in feedback information of the first signal;
receiving, in a second direction, an SSB and/or SIB sent by the second cell, where the second direction is a direction corresponding to an SSB associated with an occasion at which the first signal is sent;
starting to monitor a type 0 physical downlink control channel PDCCH associated with a target SSB, where the target SSB is an SSB associated with a random access occasion RO at which the first signal is sent;
blindly detecting scheduling information for remaining minimum system information RMSI using a system information radio network temporary identifier SI-RNTI in a type 0 common search space CSS corresponding to a control resource set 0;
blindly detecting downlink control information DCI 1_0 in a Type 0 CSS corresponding to a control resource set 0;
receiving feedback information of the first signal at a second position, where the second position is determined according to a configuration of the first signal or specified by a protocol;
skipping detection of DCI scrambled by a random access RNTI;
detecting DCI scrambled by a random access RNTI;
resending the first signal under a first condition, where the first condition includes: the terminal does not receive, within a random access response RAR time window, a second message Msg2 for contention-based random access;
after receiving a physical downlink shared channel PDSCH carrying a RAR message, not sending a physical uplink shared channel PUSCH transmission scheduled by an RAR uplink grant;
after receiving Msg2, not sending a third message Msg3 for contention-based random access;
receiving an on-demand SIB in a type 1 CSS;
receiving an on-demand SIB in a target search space, where the target search space is a search space dedicated to receiving the on-demand SIB;
determining validity of an RO of the second cell according to time division duplex TDD configuration information of the second cell, where the TDD configuration information is from the first cell; and
determining a valid uplink occasion for sending the first signal according to TDD configuration information of the second cell, where the TDD configuration information is from the first cell.

According to a ninth aspect, a network-side device is provided, where the network-side device is a second cell, and the network-side device includes a processor and a memory, where a program or instructions capable of running on the processor are stored in the memory. When the program or the instructions are executed by the processor, the steps of the method according to the second aspect are implemented.

According to a tenth aspect, a network-side device is provided, where the network-side device is a second cell, including a processor and a communication interface. The communication interface is configured to receive a first signal sent by a terminal, where the first signal is used for triggering the second cell to perform an adaptation related to an SSB and/or a SIB; and the processor is configured to perform adaptation related to the SSB and/or the SIB.

According to an eleventh aspect, a network-side device is provided, where the network-side device is a first cell, and the network-side device includes a processor and a memory, where a program or instructions capable of running on the processor are stored in the memory. When the program or the instructions are executed by the processor, the steps of the method according to the third aspect are implemented.

According to a twelfth aspect, a network-side device is provided, where the network-side device is a second cell, including a processor and a communication interface. The communication interface is configured to send first information to a terminal, where the first information is used for the terminal to perform a target operation after sending a first signal to a second cell; and the first signal is used for triggering the second cell to perform adaptation related to a synchronization signal block SSB and/or a system information block SIB.

According to a thirteenth aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to a fourteenth aspect, a communication system is provided, including a terminal and a network-side device, where the terminal is configured to execute the steps of the method according to the first aspect; and the network-side device is configured to execute the steps of the method according to the second aspect or the third aspect.

According to a fifteenth aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a sixteenth aspect, a computer program/program product is provided, where the computer program/program product is stored in a storage medium, and the program/program product is executed by at least one processor to implement the steps of the method for triggering a cell to send an SSB and/or a SIB according to the first aspect, or the steps of the method for triggering a cell to send an SSB and/or a SIB according to the second aspect, or the steps of the method for triggering a cell to send an SSB and/or a SIB according to the third aspect.

In the embodiments of this application, a UE behavior performed after the UE sends a first signal is provided, as well as a direction in which the network side sends a SIB. The direction for sending the SIB is related to an RO in which the UE sends the first signal, which can avoid the network side sending SIB omnidirectionally and improve the accuracy of SIB reception by the UE. In this application, SIB sending status information of the target cell can be carried in the SSB to help the UE determine whether the target cell can be triggered by sending the first signal to send a SIB.

### BRIEF DESCRIPTION OF DRAWINGS

FIG. 1 is a block diagram of a wireless communication system to which embodiments of this application are applicable;
FIG. 2 is a schematic diagram of an association between an SSB and a RO according to an embodiment of this application;
FIG. 3 is a first schematic flowchart of a method for triggering a cell to send an SSB and/or a SIB according to an embodiment of this application;
FIG. 4 is a first schematic diagram of a mapping relationship between an SSB and a RO according to an embodiment of this application;
FIG. 5 is a second schematic diagram of a mapping relationship between an SSB and a RO according to an embodiment of this application;
FIG. 6 is a third schematic diagram of a mapping relationship between an SSB and a RO according to an embodiment of this application;
FIG. 7 is a fourth schematic diagram of a mapping relationship between an SSB and a RO according to an embodiment of this application;
FIG. 8 is a fifth schematic diagram of a mapping relationship between an SSB and a RO according to an embodiment of this application;
FIG. 9 is a first schematic flowchart of a terminal receiving a SIB according to an embodiment of this application;
FIG. 10 is a second schematic flowchart of a terminal receiving a SIB according to an embodiment of this application;
FIG. 11 is a second schematic flowchart of a method for triggering a cell to send an SSB and/or a SIB according to an embodiment of this application;
FIG. 12 is a third schematic flowchart of a method for triggering a cell to send an SSB and/or a SIB according to an embodiment of this application;
FIG. 13 is a first schematic structural diagram of an apparatus for triggering a cell to send an SSB and/or a SIB according to an embodiment of this application;
FIG. 14 is a second schematic structural diagram of an apparatus for triggering a cell to send an SSB and/or a SIB according to an embodiment of this application;
FIG. 15 is a third schematic structural diagram of an apparatus for triggering a cell to send an SSB and/or a SIB according to an embodiment of this application;
FIG. 16 is a schematic structural diagram of a communication device according to an embodiment of this application;
FIG. 17 is a schematic structural diagram of a terminal according to an embodiment of this application; and
FIG. 18 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

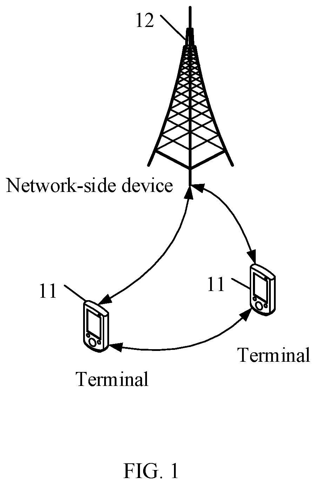

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a smart wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For description of the embodiments of this application, some concepts used in the following description are first described.

### I. Random access channel (Random Access Channel, RACH)

### (1) Mapping rules from SSB to RO in 5G NR:

Physical random access channel (Physical Random Access Channel, PRACH) resources and SSB-RO configuration parameters are configured in system information block SIB1. In NR, for a cell, multiple frequency division multiplexed (Frequency Division Multiplex, FDM) physical random access channel transmission occasions (PRACH transmission occasion, RO) may be configured at one time domain position for transmitting PRACH. At one time point, the number of ROs allowed for FDM may be {1,2,4,8}, which is configured and determined by a higher layer parameter msg1-FDM.

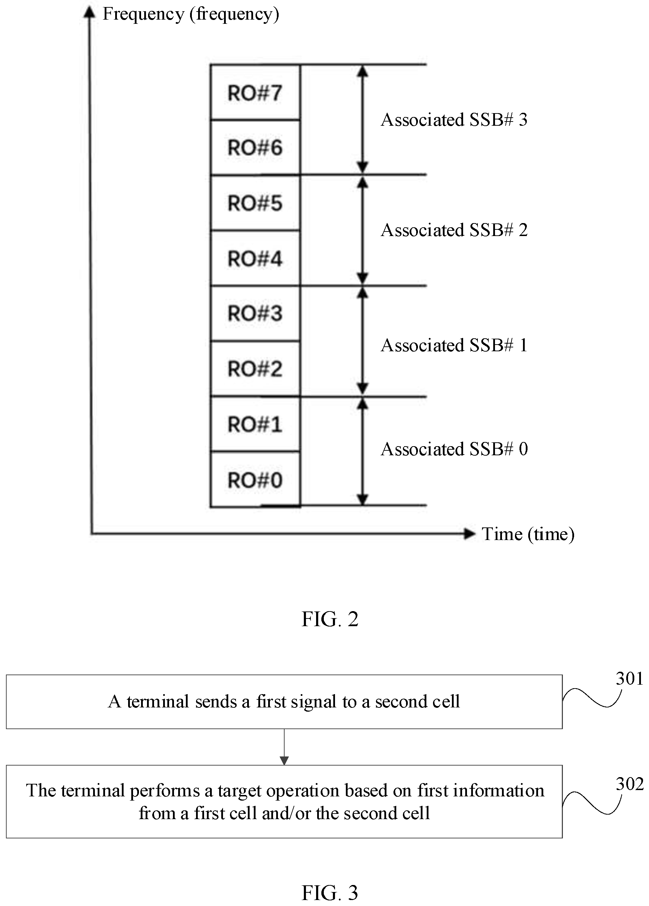

A random access preamble (Preamble) can be transmitted only on a time domain resource configured by using a PRACH configuration index (PRACHConfigurationIndex) parameter and a frequency domain resource configured by using an Msg1-FDM parameter. The PRACH frequency domain resource is *n_{RA}* ∈ {0,1, ... , *M* - 1}, where M is equal to the higher layer parameter Msg1-FDM. During initial access, the PRACH frequency domain resources *n_{RA}* are numbered in ascending order starting from a RO resource with a lowest frequency in an initial active uplink bandwidth part (initial active uplink bandwidth part); otherwise, the PRACH frequency domain resources *n_{RA}* are numbered in ascending order starting from a RO resource with a lowest frequency in an active uplink bandwidth part (active uplink bandwidth part). For example, in FIG. 2, the number of FDMed ROs at one time point is 8 (msg1-FDM=8), and RO resources are numbered sequentially as RO#0 to RO#7 from low frequency to high frequency.

In the NR, there is an association relationship between ROs and actually transmitted SSBs. ROs are associated to SSBs in an order of first frequency domain (from low frequency to high frequency) and then time domain. One SSB may be associated with multiple consecutive ROs, or multiple SSBs may be associated with one RO (in this case, different SSBs correspond to different preambles), which is configured by the network through a parameter "ssb-perRACH-OccasionAndCB-PreamblesPerSSB".

A base station may use different beams to send different SSBs, where the number of SSBs is configured by a parameter "ssb-PositionsInBurst", and for FR2, the maximum number of SSBs is 64. The UE selects, based on a strength of a received downlink beam/SSB, an RO/"RO and preamble combination" associated with an SSB with a larger signal strength to send Msg1. In this way, the network-side device can determine, based on a RO/"RO and preamble combination" of a received preamble (preamble), an SSB selected by the UE; and sends Msg2 on a downlink beam corresponding to the SSB to ensure the reception quality of the downlink signal.

Before sending a PRACH, the UE first selects an SSB with an RSRP higher than a threshold based on a reference signal received power (Reference Signal Received Power, RSRP) of the received beam (beam) (or SSB). If there are multiple SSBs with RSRPs higher than the threshold, the terminal may select any one SSB with the RSRP higher than the threshold. If there is no SSB with the RSRP higher than the threshold, the UE selects one SSB based on implementation.

Based on network (Network, NW) configuration, the UE obtains a correspondence between SSBs and ROs. After an SSB is selected, a RO corresponding to the selected SSB is used as a RO for sending PRACH/Preamble/Msg1. If the selected SSB is associated with multiple ROs, the terminal may select one of the ROs to send the PRACH/Preamble/Msg1.

### II. SIB1

### (1) Type0-PDCCH common search space set (CSS set):

The search space set is used for monitoring SIB1 system messages, corresponding to SI-RNTI scrambled DCI in a primary cell (primary cell) in a master cell group (Master Cell Group, MCG), configured by "IE: pdcch-ConfigSIB1" in signaling MIB or by "IE: serachSpaceZero" in signaling PDCCH-ConfigCommon, or by "IE: searchSpaceZero" or "searchSpaceSIB1" in signaling PDCCH-ConfigCommon.

### (2) SSB and CORESET 0

The multiplexing pattern (Multiplexing Pattern) of SSB and CORESET 0 is divided into three types: pattern 1 (Pattern 1) is time division multiplexing (a CORESET 0 frequency domain range includes SSB), and pattern 2 and pattern 3 are frequency division multiplexing (CORESET 0 and SSB in the same system frame). A difference between pattern 2 and pattern 3 lies in that in time domain, CORESET 0 of pattern 2 is ahead of an SSB position. After decoding an SSB, the UE is able to learn about a specific time-frequency resource position to blindly detect scheduling information for SIB1.

### (3) SIB1

After detecting the PBCH, the terminal has completed downlink synchronization. Before performing uplink synchronization, the terminal needs to further receive SIB1 (System Information Block Type 1) to obtain configuration information related to uplink synchronization.

The SIB1 is transmitted in a PDSCH and scheduled by a PDCCH, and a resource assignment range of the PDSCH is within a frequency range of the initial BWP; specifically:
1) PDCCH time-frequency domain resource assignment for SIB1:
   a: The PDCCH for SIB1 is mapped onto type 0-PDCCH CSS.
   b: In frequency domain, the type 0-PDCCH CSS is mapped onto CORESET 0, and a frequency range of CORESET 0 is completely the same as the initial bandwidth part (Bandwidth Part, BWP).
   c: The lower 4 bits (bit) of signaling "pdcch-ConfigSIB1" carried in PBCH indicate a configuration of type 0-PDCCH CSS, and the higher 4 bits indicate a configuration of CORESET 0.
2) PDSCH time-frequency domain resource assignment for SIB1:
   a: A conventional PDSCH uses a TDRA table configured by radio resource control (Radio Resource Control, RRC), and time domain resource assignment is performed by using an index in a table indicated by PDCCH. However, since an RRC connection has not been established when the UE receives SIB1 PDSCH, a default TDRA needs to be defined.
   b: The three multiplexing patterns of CORESET0 and SSB respectively correspond to three default time domain resource assignment (Time Domain Resource Assignment, TDRA) tables.
   c: In frequency domain, frequency domain resource assignment for SIB1 is performed within an initial access bandwidth range, using resource assignment type (type) 1.

### III. SSB

### (1) Cell-defining/non cell-defining SSB (cell-defining/non cell-defining SSB):

In the NR system, a cell-defining SSB (cell-defining SSB, CD-SSB) is defined as an SSB associated with SIB1 (that is, RMSI). SIB1 defines scheduling information for other SIBs and includes information for initial access of the terminal. A frequency position of the CD-SSB needs to be on a system synchronization raster.

A non cell-defining SSB (non cell-defining SSB, NCD-SSB) is defined as an SSB not associated with SIB1. The NCD-SSB can be used for secondary cell synchronization or as a measurement signal configured for the terminal. The NCD-SSB does not have to be located on the system synchronization raster. If the NCD-SSB is located on the system synchronization raster, it can indicate a GSFN of CD-SSB through information it carries.

### (2) Subcarrier offset value k_{SSB}:

The SSB subcarrier offset information field (ssb-SubcarrierOffset) is used to indicate a value of a subcarrier offset k_{SSB} between SSB and CORESET#0. The range of the offset includes 0-23 and 0-11 subcarriers, using 5 bits (4 bits being indicated by ssb-SubcarrierOffset, and 1 bit as the highest bit being indicated by PBCH physical layer (Physical, PHY) layer) and 4 bits respectively, corresponding to frequency ranges FR1 and FR2. 4 bits can represent 16 values, and k_{SSB} of FR2 uses only 12 values (0-11); 5 bits can represent 32 values, and k_{SSB} of FR1 uses only 24 values (0-23). To avoid waste of remaining values, 3GPP divides k_{SSB} into two parts: normal k_{SSB} (in FR1, k_{SSB} is 0-23; in FR2, k_{SSB} is 0-11) and abnormal k_{SSB}.

In FR1, if k_{SSB} > 23, or in FR2, if k_{SSB} > 11, both belong to abnormal k_{SSB}, both indicating that SSB does not have Type 0 CSS, that is, the current SSB is not associated with SIB1. However, the role of abnormal k_{SSB} is not limited to this. To allow the UE to find the cell defining SSB as soon as possible, abnormal k_{SSB} can alternatively be used as an index, along with RMSI PDCCH configuration to indicate a global synchronization channel number (Global synchronization channel number, GSCN) of a next SSB.

When k_{SSB} > 23 (FR1) or k_{SSB} > 11 (FR2), some values in the value range can be used to indicate a GSCN of CD-SSB. As shown in Table 1 and Table 2:

**Table 1: FR1**

| k_{SSB} | 16× control resource set 0 + search space 0 | ${N}_{GSCN}^{offset}$ |
|---|---|---|
| 24 | 0,1,...,255 | 1,2,...,256 |
| 25 | 0,1,...,255 | 257,258,...,512 |
| 26 | 0,1,...,255 | 513,514,...768 |
| 27 | 0,1,...,255 | -1,-2,...,-256 |
| 28 | 0,1,...,255 | -257,-258,...,-512 |
| 29 | 0,1,...,255 | -513,-514,...-768 |
| 30 | 0,1,...,255 | Reserved (reserved) |

**Table 2: FR2**

| k_{SSB} | 16× control resource set 0 + search space 0 | ${N}_{GSCN}^{offset}$ |
|---|---|---|
| 12 | 0,1,...,255 | 1,2,...,256 |
| 13 | 0,1,...,255 | -1,-2,...,-256 |
| 14 | 0,1,...,255 | Reserved (reserved) |

When the value k_{SSB}= 31 (FR1) or k_{SSB} = 15 (FR2), the UE considers that there is no CD-SSB within a specific GSCN range.

The following specifically describes a method and an apparatus for triggering a cell to send an SSB and/or a SIB, and a device provided in the embodiments of this application through specific embodiments and application scenarios thereof with reference to the accompanying drawings.

As shown in FIG. 3, an embodiment of this application provides a method for triggering a cell to send an SSB and/or a SIB, where the method is performed by a terminal and includes the following steps.

Step 301: The terminal sends a first signal to a second cell.

Step 302: The terminal performs a target operation based on first information from a first cell and/or the second cell.

The first signal is used for triggering the second cell to perform an adaptation related to a synchronization signal block SSB and/or a system information block SIB, and the first cell and the second cell are different cells.

The target operation includes at least one of the following:
(1) Receiving, at a first position, an SSB and/or SIB sent by the second cell, where the first position is determined based on the first information or specified by a protocol; and the first information may directly or indirectly indicate a position for receiving the SSB and/or SIB, or the position for receiving the SSB and/or SIB is specified by a protocol.
(2) Receiving, in a first direction, an SSB and/or SIB sent by the second cell, where the first direction is a direction corresponding to an SSB index (Index) carried in feedback information of the first signal. In this case, after receiving the feedback information of the first signal, the terminal receives an SSB and/or SIB successfully triggered by the first signal, in the direction corresponding to the SSB index carried therein.
(3) Receiving, in a second direction, an SSB and/or SIB sent by the second cell, where the second direction is a direction corresponding to an SSB associated with an occasion at which the first signal is sent. In this case, the terminal receives an SSB and/or SIB successfully triggered by the first signal, in the direction corresponding to the SSB associated with an occasion at which the first signal is sent.
(4) Starting to monitor a type 0 (Type 0) physical downlink control channel PDCCH associated with a target SSB, where the target SSB is an SSB associated with a random access occasion RO at which the first signal is sent. In this case, the terminal may start to monitor the type 0 PDCCH associated with the SSB corresponding to the RO at which the first signal is sent.
(5) Blindly detecting scheduling information for remaining minimum system information RMSI using a system information radio network temporary identifier SI-RNTI in a type 0 common search space CSS corresponding to a control resource set 0 (CORESET 0). In this embodiment, the terminal starts to blindly detecting the scheduling information for RMSI (SIB1) using a SI-RNTI in the Type 0 CSS corresponding to CORESET 0.
(6) Blindly detecting downlink control information DCI 1_0 in a Type 0 CSS corresponding to a control resource set 0. In this embodiment, the terminal may blindly detect DCI 1_0 in the Type 0 CSS corresponding to CORESET 0.
(7) Receiving first signal feedback (feedback) information at a second position, where the second position is determined according to a configuration of the first signal or specified by a protocol. In this embodiment, the terminal may monitor feedback of the first signal according to the configuration information of the first signal or a position specified by a protocol.
(8) Skipping detection of DCI scrambled by a random access RNTI. In this case, the terminal does not detect DCI scrambled by a random access RNTI. Optionally, the terminal does not monitor a second message Msg2 based on contention-based random access.
(9) Detecting DCI scrambled by a random access RNTI. Optionally, the terminal monitors a second message Msg2 based on contention-based random access.
(10) Resending the first signal under a first condition, where the first condition includes: the terminal receives, within a random access response RAR time window, no second message Msg2 for contention-based random access. In this embodiment, if the terminal receives no Msg2 within the RAR time window, the first signal is sent again. Optionally, the time window starts from the 1st symbol of the earliest CORESET of the PDCCH configured for the terminal as a Type 1-PDCCH CSS set.
(11) After receiving a physical downlink shared channel PDSCH carrying a RAR message, not sending a physical uplink shared channel PUSCH transmission scheduled by a RAR uplink grant (UL Grant). In this embodiment, after receiving the PDSCH (Msg2) carrying the RAR message, the terminal may not perform PUSCH transmission (Msg3) scheduled by the RAR UL Grant.
(12) After receiving Msg2, not sending a third message Msg3 for contention-based random access. In this embodiment, after receiving Msg2, the terminal may not send Msg3.
(13) Receiving an on-demand SIB (on-demand SIB) in a type 1 CSS. In this case, the terminal receives the on-demand SIB in the type 1 CSS, for example, not receiving a RAR, but receiving a SIB instead.
(14) Receiving an on-demand SIB in a target search space, where the target search space is a search space dedicated to receiving the on-demand SIB. In this embodiment, the terminal receives the on-demand SIB in the search space dedicated to receiving the on-demand SIB.
(15) Determining validity of an RO of the second cell according to time division duplex TDD configuration information of the second cell, where the TDD configuration information is from the first cell. In this embodiment, the terminal may determine the validity of the RO of the second cell according to the TDD configuration of the second cell coming from the first cell.
(16) Determining a valid uplink occasion (occasion) for sending the first signal according to TDD configuration information of the second cell, where the TDD configuration information is from the first cell. In this embodiment, the terminal may determine the valid uplink occasion for sending the first signal according to the TDD configuration of the second cell coming from the first cell.

In this embodiment, after sending the first signal, the terminal may perform the target operation based on the first information, where the first information is from the first cell and/or the second cell, and the first cell and the second cell are two different cells. The first signal is used for triggering one or more second cell to perform the adaptation related to the SSB and/or the SIB. After sending the first signal, the terminal performs one or more of the above target operations.

Optionally, the SIB includes SIB1. In the embodiments of this application, the SIB may be SIB1, and the SIB1 may be on-demand SIB1.

Optionally, the first signal may be an uplink wake-up signal (Wake-up signal, WUS), and the first signal may be in a form of a preamble sequence. In a case that the first signal is a WUS, the feedback information of the first signal is a WUS feedback.

In the embodiments of this application, the terminal sends the first signal to the second cell for triggering the second cell to perform adaptation related to the SSB and/or the SIB. After sending the first signal, the terminal may perform the target operation based on the first information from the first cell and/or the second cell, thereby ensuring accurate reception of the SSB and/or the SIB sent by the second cell.

As an optional embodiment, the adaptation related to the synchronization signal block SSB and/or system information block SIB includes:
adapting from not sending an SSB to sending an SSB;
adapting from not sending a SIB to sending a SIB;
adapting from sending a long-period SIB to sending a short-period SIB, for example, adapting from sending a long-period SSB to sending a short-period SSB of 20 ms;
adapting from sending a long-period SIB to sending a short-period SIB; and
adapting from sending only a primary synchronization signal (Primary Synchronisation Signal, PSS) and a secondary synchronization signal (Secondary Synchronisation Signal, SSS) to sending an SSB; where, for example, SSBs for sending only the PSS and SSS may be referred to as light (light) SSB, and the adaptation of the second cell may be from sending a light SSB to sending a normal SSB.

In this embodiment, the first signal sent by the terminal is used for triggering the second cell to perform the adaptation related to the SSB and/or the SIB. After receiving the first signal, the second cell may perform one or more of the above adaptation operations.

As an optional embodiment, a relationship between the first cell and the second cell includes one of the following:
the first cell and the second cell are intra-frequency cells (intra-frequency cell);
the first cell and the second cell are inter-frequency cells (inter-frequency cell);
the first cell and the second cell belong to a same cell group (cell group);
the first cell and the second cell belong to a same timing advance group (Timing Advance Group, TAG); and
the first cell and the second cell belong to a same tracking area (tracking area).

In this embodiment, the first cell and the second cell may be intra-frequency cells (intra-frequency cell) or inter-frequency cells (inter-frequency cell), or the first cell and the second cell belong to a same cell group or a same TAG cell (cell), or belong to a same tracking area.

As an optional embodiment, before the performing a target operation, the method further includes:
obtaining second information, where the second information is carried in an SSB sent by the second cell; and
determining a SIB sending status of the second cell based on the second information, where the SIB sending status of the second cell includes at least one of the following:
   a state of sending a SIB;
   a state of not sending a SIB;
   supporting an on-demand SIB mode; and
   not supporting an on-demand SIB mode.

In this embodiment, before performing the target operation, the terminal determines the SIB sending status of the second cell based on the second information. Optionally, the second information may belong to the first information, and the second information may be carried in the SSB of the second cell. The sending status may also be referred to as a sending mode.

Optionally, a manner in which the SSB of the second cell carries the second information includes at least one of the following:
(1) Being indicated by a synchronization sequence included in the SSB of the second cell; where for example, the second information may be carried in a synchronization sequence included in the SSB sent by the second cell.
(2) Being indicated by an existing target field in a MIB carried in a PBCH of the SSB of the second cell.

Optionally, a specific value of an existing target field in a MIB carried by the PBCH has a one-to-one mapping relationship with the SIB sending status. For example: when k_{SSB} is a specific value, it indicates that the second cell is in a state of not sending SIB1, or in a state of normally sending SIB1, or in a sending mode supporting on-demand SIB1 triggering; or, when k_{SSB} is a specific value, and PDCCH-ConfigSIB1 (pdcch-ConfigSIB1) is a specific value, it indicates that the second cell is in a state of not sending SIB1, or in a state of normally sending SIB1, or in a sending mode supporting on-demand SIB1 triggering.

In this embodiment, the second information may be carried in the SSB sent by the second cell, and be indicated through an existing target field in a message included in the SSB, for example, being indicated through the MIB carried by the PBCH contained in the SSB. Optionally, the existing fields in the MIB include one or more of the following: system frame number (systemFrameNumber), common subcarrier spacing (subCarrierSpacingCommon), SSB subcarrier offset (ssb-SubcarrierOffset), DMRS-TypeA-Position (dmrs-TypeA-Position), PDCCH-ConfigSIB1 (pdcch-ConfigSIB1), cellBarred (cellBarred), intraFreqReselection (intraFreqReselection), and spare (spare). The second information may be indicated by setting any of the existing fields to a specific value.

For example, an energy saving status of the second cell is indicated by ssb-SubcarrierOffset (k_{SSB}) indicated by the SSB, and when k_{SSB} equals a specific value, the UE considers the SIB sending status/SIB sending mode of the second cell as follows:
normally sending a SIB;
not sending a SIB; and
supporting an on-demand SIB mode.

The specific value is, for example: a reserved value (reserved value), such as k_{SSB} = 30 (FR1) or k_{SSB} = 14 (FR2), indicating that the network side is currently in on-demand SIB1 mode and currently does not send SIB1.

(3) Being indicated by a newly added payload (payload) in the synchronization sequence included in the SSB of the second cell.

In this embodiment, an additional payload may be newly added in the synchronization sequence included in the SSB of the second cell to indicate an energy saving status of the second cell, for example, indicating that the second cell is in a state of normally sending a SIB, a state of not sending a SIB, or supporting an on-demand SIB mode.

(4) Being indicated by a newly added payload in the PBCH of the SSB of the second cell; where in this embodiment, an additional payload may be newly added to the PBCH contained in the SSB of the second cell to indicate the energy saving status of the second cell.

(5) Being implicitly indicated by a PBCH demodulation reference signal DMRS included in the SSB of the second cell; where there is a mapping relationship between a DMRS sequence of the PBCH and a SIB or SSB sending status. In this embodiment, the SIB and/or SSB sending status may be implicitly indicated by the PBCH DMRS in the SSB sent by the second cell.

The implicit indication manner is, for example, if the UE receives a DMRS sequence A, the DMRS sequence A indicates that the second cell is in a state of not sending a SIB; or if the UE receives a DMRS sequence B, the DMRS sequence B indicates that the second cell is in a state of sending a SIB. The above implicit indication correspondence is pre-configured by the network side for the UE, or specified by the protocol.

The following describes, by way of example, manners of indicating the SIB and/or SSB sending status of the second cell by using one or more fields.

For example, some indication information (such as the second information) is carried in the SSB of the second cell to indicate the SIB and/or SSB sending status of the second cell. Such indication information may be carried in a synchronization sequence or PBCH. For example, one or more fields in the related art are reinterpreted, and specific values are used as checks for the SIB and/or SSB sending status.

Information fields included in the conventional MIB (obtained from the PBCH of the SSB), and available values of the information fields are as follows:

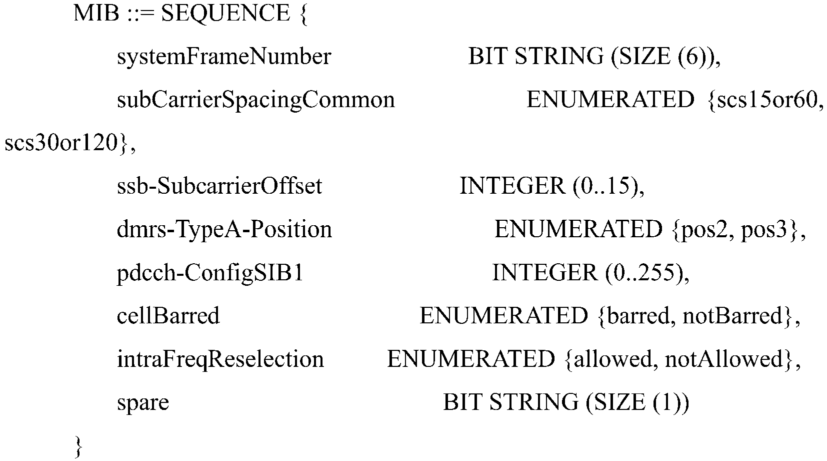

When a specific field in the above information fields is a specific value, it may be used to implicitly indicate the SIB and/or SSB sending status of the second cell. For example, when the SFN is a specific value, such as all 0s or all 1s, it is used to indicate that the second cell has/does not have normal SIB1/SSB sending; or the SFN is 7 bits, compared with the current 6 bits in the protocol, the lowest/highest bit added in this embodiment may be used to indicate that the second cell has/does not have normal SIB1/SSB sending.

In addition, ssb-SubcarrierOffset may alternatively be set to a special value to indicate the SIB1 and/or SSB sending status of the second cell. k_{SSB} is 5 bits in FR1 and 4 bits in FR2. For FR1, 0-29 all have corresponding meanings, and for FR2, 0-13 all have corresponding meanings. To avoid conflict with the above existing mechanisms, it may be set that when ssb-SubcarrierOffset is a specific value, such as in FR1, when ssb-SubcarrierOffset=30 included in the SSB sent by the second cell, it indicates that the second cell is in a state of normally sending SIB1, and when ssb-SubcarrierOffset=31, it indicates that the second cell is in a state of on-demand SIB1 (that is, not sending SIB1 currently); in FR2, when ssb-SubcarrierOffset=14 included in the SSB sent by the second cell, it indicates that the second cell is in a state of on-demand SIB1 (that is, not sending SIB1 currently), as shown in Table 1 and Table 2.

The SIB and/or SSB sending status may alternatively be implicitly indicated by the PBCH DMRS in the SSB sent by the second cell, or the SIB and/or SSB sending status is indicated by using a combination of the several methods.

Optionally, k_{SSB} may alternatively be used to indicate whether the cell is a cell supporting an on-demand SIB1 mode.

For example: for FR1, when k_{SSB}=30, and the value of RMSI-PDCCH-config (CORESET0+searchspace0) or pdcch-ConfigSIB1 is a specific value, it may be used to indicate a current SIB1 sending status of a cell sending an SSB.

k_{SSB}=30+RMSI-PDCCH-config=0, indicating that the cell sending the SSB is in a state of not sending SIB1.

k_{SSB}=30+RMSI-PDCCH-config=1, indicating that the cell sending the SSB is in a state of normally sending SIB1.

k_{SSB}=30+RMSI-PDCCH-config=2, indicating that the cell sending the SSB is a cell supporting on-demand SIB1.

In the above embodiments, since the value of RMSI-PDCCH-config (or pdcch-ConfigSIB1) is bound to k_{SSB} to indicate a SIB1 sending status of a target cell, pdcch-ConfigSIB1 cannot be used to indicate configuration information of CORESET0 and search space 0 (searchspace0). Because the target cell is in on-demand SIB1 state, that is, in a state of not sending SIB1 in energy saving, the UE itself does not need to obtain the configuration information of CORESET0 and searchspace0 (that is, does not need to monitor scheduling information for SIB1 according to the configuration of CORESET0 and searchspace0). However, when triggering by the first signal is successful, the UE needs to start receiving SIB1, and at that time, the UE may obtain the CORESET0 and searchspace0 configuration information from the first information.

As an optional embodiment, the first information includes at least one of the following:
a second-cell identifier;
the second cell supporting or not supporting on-demand SIB; that is, the first information indicating whether the second cell supports on-demand SIB;
the second cell supporting or not supporting on-demand SSB; that is, the first information indicating whether the second cell supports on-demand SSB;
a TDD configuration (TDD configuration) of the second cell;
unified access control (Unified Access Control, UAC) configuration;
a cell barring (bar) configuration;
a first signal configuration for triggering SSB sending;
a first signal configuration for triggering SSB adaptation (adaptation);
a first signal configuration for triggering SIB sending;
a first signal configuration for triggering SIB adaptation;
triggering condition information of a first signal;
a SIB configuration of the second cell after successful triggering by the first signal; where the successful triggering by the first signal may refer to successfully triggering the second cell to perform adaptation related to SSB and/or SIB, for example: triggering the second cell to adapt from not sending an SSB to sending an SSB, triggering the second cell to adapt from sending a long-period SSB to sending a short-period SSB; and
an SSB configuration of the second cell after successful triggering by the first signal.

In this embodiment, the first information corresponds to one or more second cells, and the first information can be explicitly configured by the first cell or the second cell through broadcast information, or may default to the same as corresponding information content of the first cell. Optionally, the first signal configuration is configured per cell, or is configured per cell group.

Optionally, the SIB configuration of the second cell after successful triggering by the first signal includes at least one of the following:
a period for sending a SIB, which indicates a period for sending a SIB by the second cell after successful triggering;
a control resource set 0 configuration, which indicates a CORESET0 configuration for sending a SIB by the second cell after successful triggering;
a searchspace0 (searchspace0) configuration, which indicates a searchspace0 configuration for sending a SIB by the second cell after successful triggering;
a type 0 PDCCH configuration, which indicates a type 0 PDCCH configuration for sending a SIB by the second cell after successful triggering;
a SIB monitoring window, which indicates a monitoring window for monitoring a SIB by the terminal after successful triggering, where the terminal may monitor the SIB within the monitoring window;
a time length for transmitting a SIB, which indicates a time length for sending a SIB by the second cell after successful triggering;
the number of times for sending a SIB, which indicates the number of times for sending a SIB by the second cell after successful triggering;
the number of periods for sending a SIB, which indicates the number of periods for sending a SIB by the second cell after successful triggering;
frequency domain information of a SIB, which may include: a position of the frequency domain starting point, the number of frequency bands occupied in frequency domain, a bandwidth size of the signal, and the like, where the position of the frequency domain starting point is, for example, a position of a carrier, BWP, or frequency band where it is located;
time domain information of a SIB, which may include: a time domain position (such as an offset between synchronization/broadcast channels), a size or period of a monitoring window, a time domain repetition count, a pattern, and the like; and
a SIB sending mode.

Optionally, the SIB sending mode includes at least one of the following:
a normal SIB sending mode, which is a conventional SIB sending mode relative to a simplified SIB sending mode;
a simplified SIB sending mode, for example, only for sending core configurations such as RACH;
a clustered SIB sending mode, for example, no time domain gap (gap) between multiple SIBs; and
a long-period SIB sending mode, that is, a period for sending SIB1 is relatively long.

Optionally, the SSB configuration of the second cell after successful triggering by the first signal includes at least one of the following:
a frequency for sending an SSB, which indicates a frequency for sending the SSB by the second cell after successful triggering by the first signal, or may indicate a period for sending the SSB by the second cell after successful triggering, the number of SSBs sent per period, or the like;
a time domain index or time domain position for sending an SSB, which indicates one or more time domain indexes or positions for sending an SSB by the second cell after successful triggering;
an SSB monitoring window, which indicates a monitoring window for monitoring, by the terminal, an SSB sent by the second cell after successful triggering by the first signal, and the terminal may monitor, within the monitoring window, the SSB sent by the second cell;
a time length for transmitting an SSB, which indicates a transmission time length of the SSB of the second cell after successful triggering by the first signal;
the number of times for sending an SSB, which indicates the number of times for sending the SSB by the second cell after successful triggering by the first signal;
the number of periods for sending an SSB, which indicates the number of sending periods for sending an SSB by the second cell after successful triggering by the first signal;
a time domain relationship between a triggered SSB and an SSB of a first carrier; where the first carrier is a carrier that can be used for time-frequency reference synchronization of the second cell, which indicates a time domain relationship between the SSB sent by the second cell after successful triggering by the first signal and the first carrier;
a frequency domain relationship between a triggered SSB and an SSB of a first carrier; which indicates a frequency domain relationship between the SSB sent by the second cell after successful triggering by the first signal and the first carrier;
a spatial domain relationship between a triggered SSB and an SSB of a first carrier; which indicates a spatial domain relationship between the SSB sent by the second cell after successful triggering by the first signal and the first carrier;
a time domain position for sending the 1st SSB, which indicates a time domain position at which the second cell starts sending the 1st SSB after successful triggering by the first signal, for example, sending in a nearest SSB period being X slots (slot)/symbols (symbol) after a sending time of triggering a signal (the first signal); and
an SSB sending mode.

Optionally, the SSB sending mode includes at least one of the following:
a normal SSB sending mode, which is a conventional SSB sending mode relative to a simplified SSB sending mode;
a simplified SSB sending mode; for example, only sending a PSS and an SSS;
a clustered SSB sending mode, for example, no time domain gap between multiple SSBs; and
a long-period SSB sending mode, where, for example, a period for sending the SSB by the second cell is relatively long.

As an optional embodiment, the first signal configuration includes at least one of the following:
(1) A configuration for monitoring feedback information of the first signal; where an example of the feedback information of the first signal is PDCCH of Msg2.

Optionally, the configuration for monitoring feedback information of the first signal includes at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

(2) A sending configuration of the first signal.

Optionally, the sending configuration of the first signal includes at least one of the following:
1) Signal synchronization reference configuration, which may include at least one of the following: an SSB of the first carrier, a channel state information reference signal (Channel State Information Reference Signal, CSI-RS), a phase-tracking reference signal (Phase-tracking reference signal, TRS), global positioning system (Global Positioning System, GPS) timing (timing), and the like.
2) Signal type configuration, for example, RACH, SRS, or PUCCH.
3) Signal time domain resource configuration.
4) Signal frequency domain resource configuration.
5) Signal sequence configuration, for example, including a preamble index (preamble index) or a preamble index range or a preamble group index (preamble group index); for example, performing preamble grouping and indicating a preamble group index, which indicates that the preamble group is used for triggering sending of an SSB of a second carrier or a carrier group.
6) Signal power configuration.

Optionally, the signal power configuration includes at least one of the following:
an initial signal power;
a power ramping step size of a signal power;
the number of repetitions corresponding to each signal sending; and
the maximum number of repetitions for signal transmission.

7) Signal spatial domain parameter configuration.

The signal spatial domain parameter configuration may include at least one of the following: a correspondence between the signal and the SSB of the first carrier or the second carrier or the carrier group; and a signal sending timer (Timer) configuration. The Timer is used to avoid too frequent sending of the first signal, the Timer is started after sending the first signal, and repeated sending of the first signal is not allowed before the Timer expires.

As an optional embodiment, in a case that the target operation is receiving, at the first position, the SSB and/or SIB sent by the second cell, the first position includes at least one of the following:
(1) Being X time units after sending of the first signal, where X is greater than 0; and the time unit is, for example, slot (slot), symbol (symbol), or millisecond (ms). The terminal may start detecting or receiving one or more SSBs and/or SIBs sent by the second cell X time units after sending of the first signal.
(2) Being Y time units after receiving of the feedback information of the first signal, where Y is greater than 0, and the terminal may start detecting or receiving one or more SSBs and/or SIBs sent by the second cell Y time units after receiving of the first-signal feedback.
   The value of X and/or Y may include: a predefined value plus a target offset value, where the target offset value is determined based on the 1st SSB/SIB of a next SSB/SIB1 period. The predefined value can ensure that the network side has time to perform receiving and detecting of the first signal, that is, after receiving the first-signal feedback, the terminal receives SSB/SIB1 at a sending position of the 1st SSB/SIB of the next SSB/SIB1 period after a predefined time unit.
(3) Being a time position determined based on SIB scheduling information that is monitored at a third position, where the third position is the 1st PDCCH occasion, for scheduling a SIB, closest to a time point of sending the first signal; and the terminal may start to monitor scheduling information of SSB and/or SIB at the 1st PDCCH occasion for scheduling SIB closest to a time point of sending the first signal.
(4) Being a time position determined based on SIB scheduling information that is monitored at a fourth position, where the fourth position is the 1st PDCCH occasion, for scheduling a SIB, closest to a time point of receiving the feedback information of the first signal; and the terminal may start to monitor scheduling information of SSB and/or SIB at the 1st PDCCH occasion for scheduling SIB closest to the time point of receiving the first-signal feedback.
(5) Being within a timing duration of a first timer started after sending of the first signal; where the terminal starts the first timer after sending the first signal, and monitors or detects the SSB and/or SIB within the timing duration of the first timer.
(6) Being a time after a second timer started after sending of the first signal expires; where the terminal starts the second timer after sending the first signal, and monitors or detects the SSB and/or SIB after the timing duration of the second timer expires.
(7) Being within a monitoring window that is enabled Z time units after sending of the first signal, where Z is greater than 0; where the terminal starts the monitoring window Z time units after sending of the first signal, and monitors or detects the SSB and/or SIB within the monitoring window.
(8) Being within a monitoring window enabled after receiving of the feedback information of the first signal; where the terminal starts the monitoring window after receiving the first signal feedback, and monitors or detects the SSB and/or SIB within the monitoring window. Optionally, if the terminal does not receive the SSB and/or SIB within the monitoring window, the first signal is sent again.

Values of X, Y, and Z are configured by a network-side device, or specified by a protocol, or included in the first signal configuration.

A timing duration of the first timer and/or the second timer is configured by a network-side device, or specified by a protocol, or included in the first signal configuration; and a starting position, an ending position, and a duration of the monitoring window are configured by a network-side device, or specified by a protocol, or included in the first signal configuration.

As an optional embodiment, in a case that the target operation is receiving the feedback information of the first signal at the second position, the second position includes at least one of the following:
(a) Being Q time units after sending of the first signal, where a value of Q is configured by a network-side device, or specified by a protocol, or included in the first signal configuration; and the terminal starts detecting the feedback information of the first signal after Q time units after sending the first signal. The time unit is, for example, slot (slot), symbol (symbol), millisecond (ms).
(b) Being a time point after a third timer started after sending of the first signal expires; where the terminal starts the third timer after sending the first signal, and starts detecting the feedback information of the first signal after the third timer expires.
(c) Being within a timing duration of a fourth timer started after sending of the first signal; where the terminal starts the fourth timer after sending the first signal, and detects the feedback information of the first signal within the timing duration of the fourth timer.
(d) Being within a monitoring window started after sending of the first signal; where the terminal starts the monitoring window after sending the first signal, and detects the feedback information of the first signal within the monitoring window. Optionally, if the terminal does not receive the feedback information of the first signal within the monitoring window, the first signal is sent again.

A timing duration of the third timer and/or the fourth timer is configured by a network-side device, or specified by a protocol, or included in the first signal configuration; and a starting position, an ending position, and a duration of the monitoring window are configured by a network-side device, or specified by a protocol, or included in the first signal configuration.

As an optional embodiment, a starting time point for monitoring the type 0 physical downlink control channel PDCCH includes at least one of the following:
(A) The 1st PDCCH occasion after sending of the first signal; where the terminal may start to monitor type 0 PDCCH at the 1st PDCCH occasion after sending the first signal.
(B) The 1st PDCCH occasion being S time units after sending of the first signal, where S is greater than 0; and the terminal may start to monitor type 0 PDCCH at the 1st PDCCH occasion after S time units after sending the first signal. The time unit is, for example, slot (slot), symbol (symbol), millisecond (ms).
(C) The 1st PDCCH occasion being T time units after receiving of the feedback information of the first signal, where T is greater than 0; where the terminal may start to monitor type 0 PDCCH at the 1st PDCCH occasion after T time units after receiving the first signal feedback.
(D) The 1st symbol of an earliest control resource set for receiving the type 0 PDCCH after sending of the first signal; where the terminal may start to monitor type 0 PDCCH from the 1st symbol of the earliest CORESET for receiving type 0 PDCCH after sending the first signal.
(E) The 1st symbol of an earliest control resource set for receiving the type 0 PDCCH that is U time units after sending of the first signal, where U is greater than 0; and the terminal may start to monitor type 0 PDCCH from the 1st symbol of the earliest CORESET for receiving type 0 PDCCH after U time units after sending the first signal.
(F) The 1st symbol of an earliest control resource set for receiving the type 0 PDCCH that is V time units after receiving of the feedback information of the first signal, where V is greater than 0; and the terminal may start to monitor type 0 PDCCH from the 1st symbol of the earliest CORESET for receiving type 0 PDCCH after V time units after receiving the first signal feedback.
(G) Being a time point after a fifth timer started subsequent to sending of the first signal expires; where the terminal starts the fifth timer after sending the first signal, and starts to monitor type 0 PDCCH after the fifth timer expires.
(H) Being a time point after receiving of the feedback information of the first signal; where the terminal may start to monitor type 0 PDCCH after receiving the first signal feedback.

The values of S, T, U, and V are configured by a network-side device, or specified by a protocol, or included in the first signal configuration; and a timing duration of the fifth timer is configured by a network-side device, or specified by a protocol, or included in the first signal configuration.

As an optional embodiment, the sending a first signal to a second cell includes:
sending the first signal to the second cell based on a second condition; where in this embodiment, the condition for sending the first signal by the terminal may be specified by the protocol, configured by the network side, or determined based on the first information.

The second condition includes at least one of the following:
1) Cell selection (Cell selection) is performed; where the terminal may send the first signal to the second cell when performing cell selection.
2) Cell reselection (Cell reselection) is performed; where the terminal may send the first signal to the second cell when performing cell selection.
3) After cell selection or cell reselection has been performed, the terminal needs to access the second cell, the second cell is a cell supporting on-demand SIB, and the terminal has received the first signal configuration for triggering the second cell to send a SIB.
4) The terminal has received the first signal configuration for triggering the second cell to send a SIB, where in a case that the terminal receives the first signal configuration for triggering the second cell to send a SIB, the first signal may be sent.
5) The terminal has received the first signal configuration for triggering the second cell to send a SIB, and the second cell supports on-demand SIB sending; where in a case that the terminal receives the first signal configuration for triggering the second cell to send a SIB, and the second cell supports an on-demand SIB mode, the first signal may be sent.
6) The terminal has received the first signal configuration for triggering the second cell to send a SIB, and the second cell is configured as barred; where in a case that the terminal receives the first signal configuration for triggering the second cell to send a SIB, and the second cell is configured as a barred (bar) state, the first signal may be sent. The second cell being configured as barred means that the second cell is barred.
7) The terminal has received the first signal configuration for triggering the second cell to send a SIB, the second cell is configured as barred, and the terminal needs to access the second cell.
8) The terminal has received the first signal configuration for triggering the second cell to send a SIB, and the terminal is not allowed to camp on a current cell; where in a case that the terminal receives the first signal configuration for triggering the second cell to send a SIB, and the terminal determines to be unable to camp on the current cell, the first signal may be sent to the second cell.
9) The terminal has received the first signal configuration for triggering the second cell to send a SIB, the terminal is not allowed to camp on a current cell, and the second cell is a suitable cell (suitable cell).
10) The terminal has received the first signal configuration for triggering the second cell to send a SIB, and the terminal needs to send a physical random access channel PRACH on the second cell.
11) The terminal has received the first signal configuration for triggering the second cell to send a SIB, and the first information or second information indicates that the second cell is in a state of barring the terminal from camping.
12) The first cell does not satisfy a camping condition, and the terminal has received the first signal configuration for triggering the second cell to send a SIB; where if the terminal determines that the first cell does not satisfy a terminal camping condition, and the terminal receives the first signal configuration for triggering the second cell to send a SIB, the terminal may send the first signal.
13) The terminal initiates random access; where the first signal may be sent in a case that the terminal initiates random access.
14) The terminal determines that the first cell is not allowed for camping, and the second cell is a suitable cell (suitable cell); where if the terminal determines that the first cell cannot be camped on, and the second cell is a suitable cell, the terminal may send the first signal.

As an optional embodiment, the condition for sending the first signal by the terminal may further include: if the terminal performs cell detection, and has received the SSB and has detected no SIB1, the first signal may be used to wake up the target cell.

For example, if k_{SSB} indicates CD-SSB (in FR1, k_{SSB} is 0 to 23; in FR2, k_{SSB} is 0 to 11), normally, SIB1 can be detected in the CORESET0 and SSB that are associated with these CD-SSBs, but if the terminal does not detect SIB1 at a corresponding position, the terminal may use the first signal to wake up the second cell.

If k_{SSB} indicates NCD-SSB, that is, in FR1, if k_{SSB} > 23, in FR2, if k_{SSB} > 11, it indicates that the SSB does not have Type 0 CSS, the terminal may find a GSCN of the next SSB based on the indicated k_{SSB} and an RMSI PDCCH configuration (PDCCH Config SIB1 of MIB), and then detect whether the next SSB is a CD-SSB or an NCD-SSB.

As an optional embodiment, the sending a first signal to a second cell includes: sending the first signal to the second cell on a target resource; where the target resource is carried by the first information, or specified by the protocol.

The target resource includes at least one of the following:
a resource for random access in the second cell; where the terminal may send the first signal on the resource for random access of the second cell;
part of occasions in a resource for random access in the second cell; where the terminal may send the first signal on part of occasions in the resource for random access of the second cell;
one occasion in a resource for random access in the second cell; where the terminal may send the first signal on one occasion in the resource for random access of the second cell; and
a resource only for sending the first signal, and not a resource for random access in the second cell; where optionally, this resource is completely independent of the resource for random access of the second cell, and is a resource dedicated to sending the first signal. In this case, the RO for sending the first signal is only used for sending the first signal, and it is not necessary to specify an association relationship between SSB and RO.

As an optional embodiment, the sending a first signal to a second cell includes at least one of the following:
selecting, based on a reference signal measurement result of the second cell; an RO corresponding to an SSB and sending the first signal;
sending the first signal on a time domain resource dedicated to sending the first signal;
sending the first signal on a frequency domain resource dedicated to sending the first signal; and
sending the first signal on an RO associated with a target SSB index, where the target SSB index is configured by a network-side device, or specified by a protocol, or included in the first signal configuration.

In this embodiment, when sending the first signal, the terminal may select, based on a reference signal measurement result of the second cell; an RO corresponding to an SSB and send the first signal. For example, Msg1 may serve as the first signal. The terminal may send the first signal on a time domain resource or frequency domain resource dedicated to sending the first signal. The terminal may send the first signal on an RO associated with a target SSB index.

As an optional embodiment, the feedback information of the first signal includes at least one of the following:
1) Simplified Msg2 (Simplified Msg2), where the simplified Msg2 includes a random access preamble identifier RAPID; and the simplified Msg2 may include only the RAPID, while the legacy Msg2 (Legacy Msg2) includes RAPID, timing advance (Timing Advance, TA) command (command), uplink grant (UL grant), BI, or the like.
2) SSB index (SSB index), where the SSB index may be used to notify the UE that a direction for sending subsequent SIBs may refer to a sending direction of the SSB index.
3) RAPID, where if the RAPID is the same as an ID of a preamble of the first signal sent by the terminal, the terminal considers that sending of the first signal is successful, and if not the same, the terminal considers that sending of the first signal fails.
4) SIB direction information; for example, quasi co-location (quasi co-location, QCL) information, used to inform the terminal of the sending direction of the subsequent SIB.
5) First indication information, used for indicating that the terminal does not need to resend the first signal, where the first indication information is DCI or a media access control control element (MAC CE); and the first indication information may be a dedicated first signal feedback (DCI), used to inform the terminal that the second cell has woken up and does not need to resend the first signal. Optionally, 1-bit information may be used to indicate whether a current SIB is in a normal sending state.
6) A PDSCH carrying a SIB after successful triggering, where the terminal may learn, based on the feedback information, the PDSCH of the SIB after successful triggering.
7) Type 0 common search space PDCCH (Type 0 CSS PDCCH), where the terminal may monitor type 0 CSS PDCCH based on the feedback information.

As an optional embodiment, a receiving direction of the feedback information of the first signal includes at least one of the following:
a direction of an SSB associated with an occasion at which the terminal sends the first signal;
a direction of one or more adjacent SSBs of the SSB associated with the occasion at which the terminal sends the first signal; and
all directions.

In this embodiment, the second cell may send the first signal feedback according to the direction of the SSB associated with the occasion at which the terminal sends the first signal; then the terminal may receive the first signal feedback in the direction of the SSB associated with the occasion at which the first signal is sent. The second cell may send the first signal feedback according to the direction of one or more adjacent SSBs of the SSB associated with the occasion at which the terminal sends the first signal; then the terminal may receive the first signal feedback in the direction of one or more adjacent SSBs of the SSB associated with the occasion at which the first signal is sent. The second cell may send the first signal feedback omnidirectionally, then the terminal may receive the first signal feedback omnidirectionally.

As an optional embodiment, in a case that the terminal receives the SIB sent by the second cell, a receiving direction of a PDCCH of the SIB and/or a receiving direction of the SIB includes at least one of the following:
a direction of an SSB associated with an occasion at which the terminal sends the first signal;
a direction of one or more adjacent SSBs of the SSB associated with the occasion at which the terminal sends the first signal; and
all directions.

In this embodiment, the second cell may send the PDCCH of SIB and/or the SIB according to the direction of the SSB associated with the occasion at which the terminal sends the first signal; then the terminal may receive the PDCCH of SIB and/or the SIB in the direction of the SSB associated with the occasion at which the first signal is sent. The second cell may send the PDCCH of SIB and/or the SIB according to the direction of one or more adjacent SSBs of the SSB associated with the occasion at which the terminal sends the first signal; then the terminal may receive the PDCCH of SIB and/or the SIB in the direction of one or more adjacent SSBs of the SSB associated with the occasion at which the first signal is sent. The second cell may send the PDCCH of SIB and/or the SIB omnidirectionally; then the terminal may receive the PDCCH of SIB and/or the SIB omnidirectionally.

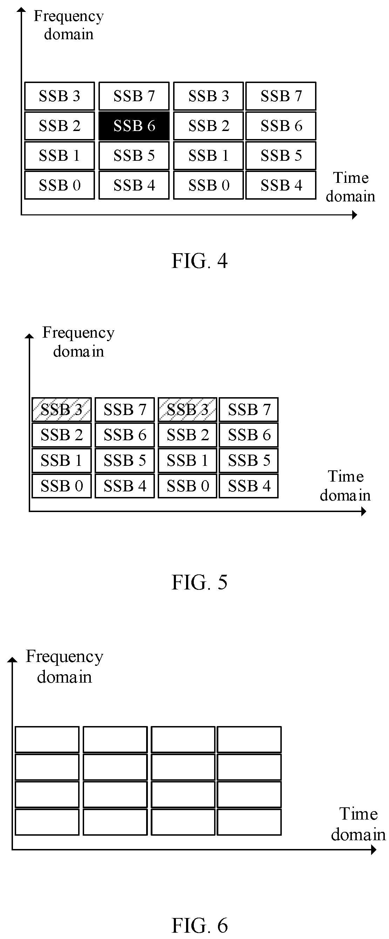

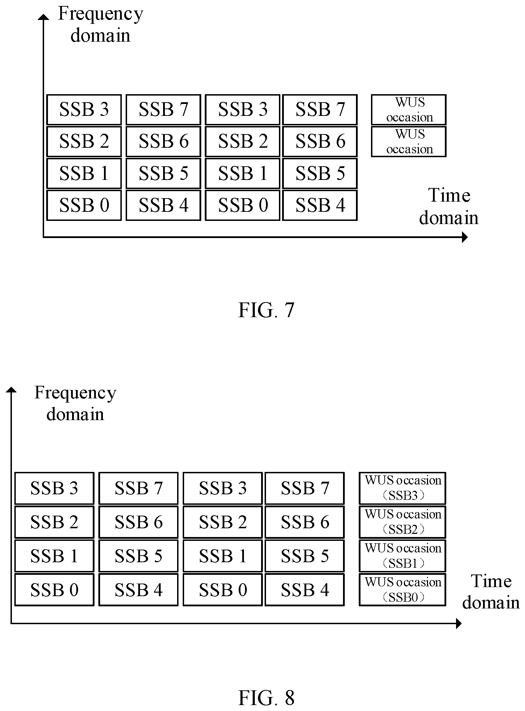

Taking the SIB as on-demand SIB1 as an example, assuming that the terminal obtains the first information from the first cell, the first information includes information such as resource configuration for sending the first signal (such as a RACH resource configuration or a preamble configuration), SSB related information of the second cell (such as a sending period or sending quantity of SSBs), the second cell supporting on-demand SIB1, and SIB1 configuration of the second cell after successful triggering. Multiple manners for receiving on-demand SIB1 by the terminal are exemplified as follows:
Manner 1: The network side configures the RO for sending the first signal as the RO for RACH of the second cell. The schematic diagram of mapping between SSB and RO is shown in FIG. 4. Assuming that each RO maps to one SSB, taking the first signal as WUS as an example, the method for receiving on-demand SIB1 by the terminal includes:
   Step 41: The UE selects a RO corresponding to SSB6 based on an SSB measurement result and sends a WUS; and in X ms after sending of the WUS, starts to monitor a WUS feedback (PDCCH for Msg2) in a CORESET and SS configured for monitoring WUS feedback in a WUS configuration.
   Step 42: The network side detects the WUS sent by the UE on the RO, sends Msg2 as feedback information of the WUS, and sends SIB1 to the UE in a direction of SSB6 or multiple SSBs adjacent to SSB6.
   Step 43: After monitoring the WUS feedback in the CORESET and SS for monitoring WUS feedback, the UE does not send Msg3, and starts to monitor scheduling information for SIB1 at the 1st PDCCH occasion for scheduling SIB1 closest to a time of receiving the WUS feedback (Msg2).
   The monitoring duration for monitoring SIB1 or the number of SIB1s monitored depends on the first information or is specified by the protocol, for example, it is specified that the terminal monitors X periods, or monitors Y slots.
Manner 2: The RO for sending the first signal by the terminal is part or one of legacy ROs. The network side configures that the RO associated with the target SSB index can be used to send the first signal. The UE does not consider an SSB with the largest RSRP, and can merely send the first signal in a RO corresponding to a specified target SSB index. As shown in FIG. 5, assuming that the target SSB index is SSB3, taking the first signal being a WUS as an example, after receiving the WUS, the second cell needs to send SIB1 omnidirectionally. The method for receiving on-demand SIB1 by the terminal includes:
   Step 51: The UE cannot camp on the first cell, and receives a WUS configuration of the second cell; and the network side configures the UE to send a WUS (Msg1) in the RO associated with the target SSB index (SSB index = 3), to trigger the second cell to send SIB1, where the WUS is a preamble with a specific random access preamble index (specific Random Access Preamble index) configured by the network side or specified by the protocol.
   Step 52: The UE sends a WUS on the RO associated with the SSB of an SSB index = 3; and in Z slots after sending of the WUS, the UE starts to monitor SIB1 at the closest 1st PDCCH occasion for scheduling SIB1.
   Step 53: On the RO associated with the SSB of SSB index = 3, the network side detects the WUS sent by the UE; and then starts sending SIB1 omnidirectionally.
   The monitoring duration for monitoring SIB1 or the number of SIB1s monitored depends on the first information or is specified by the protocol, for example, it is specified that the terminal monitors X periods, or monitors Y slots.
Manner 3: Taking the first signal being a WUS as an example, the network side configures an occasion (WO) for sending WUS as an RO for RACH of the second cell, and there is no mapping between SSB and WO. As shown in FIG. 6, there is no mapping relationship between SSB and RO. The method for receiving on-demand SIB1 by the terminal includes:
   Step 61: The UE cannot camp on the first cell, and receives a WUS configuration from the second cell, where the WUS configuration configures a time domain and frequency domain configuration of the occasion that can be used for sending a WUS.
   Step 62: The UE sends a WUS on the occasion for WUS sending indicated by the WUS configuration; and in X ms after WUS sending, the UE starts to monitor SIB1 at the closest 1st PDCCH occasion for scheduling SIB1.
   Step 63: The network side detects, on the WUS occasion, the WUS sent by the UE, and then starts sending SIB1 omnidirectionally.
   The monitoring duration for monitoring SIB1 or the number of SIB1s monitored depends on the first information or is specified by the protocol, for example, it is specified that the terminal monitors X periods, or monitors Y slots.
Manner 4: Taking the first signal being a WUS as an example, the network side configures the RO for sending a WUS as a separate (separate) resource (WUS occasion) completely independent of a resource for random access of the second cell, as shown in FIG. 7. The WUS occasion is only used for sending a WUS, with no need to specify an association relationship between SSB and occasion. After receiving the WUS, the network side sends SIB1 omnidirectionally. The method for receiving on-demand SIB1 by the terminal includes:
   Step 71: The UE cannot camp on the first cell, and receives a WUS configuration from the second cell; and the UE sends a WUS (Msg1) on the WUS occasion configured by the network side, to trigger the second cell to send SIB1.
   Step 72: The network side detects, on the WUS occasion, the WUS sent by the UE.
   Step 73: In Y slots after WUS sending, the UE starts to monitor scheduling information for SIB1 on the closest 1st PDCCH occasion for scheduling SIB1.
   The monitoring duration for monitoring SIB1 or the number of SIB1s monitored depends on the first information or is specified by the protocol, for example, it is specified that the terminal monitors X periods, or monitors Y slots.
Manner 5: Taking the first signal being a WUS as an example, the network side configures the RO for sending a WUS as a separate resource (WUS occasion) completely independent of a resource for random access of the second cell. The WUS occasion is only used for sending a WUS, and there is a mapping between SSB and WUS occasion, as shown in FIG. 8. After receiving the WUS, the network side sends SIB1 in the direction of the SSB associated with the occasion for sending the WUS. The method for receiving on-demand SIB1 by the terminal includes:
   Step 81: The UE cannot camp on the first cell, and receives a WUS configuration from the second cell; and the UE sends a WUS (Msg1) on a WUS occasion associated with an SSB whose measurement result meets the target threshold value among WUS occasions configured by the network side, to trigger the second cell to send SIB1.
   Step 82: The network side detects the WUS sent by the UE on the WUS occasion; and the network side sends SIB1 in the direction of the SSB associated with the occasion where the UE sends the WUS or in the direction of several nearby SSBs.
   Step 83: In Y slots after WUS sending, the UE starts to monitor scheduling information for SIB1 on the closest 1st PDCCH occasion for scheduling SIB1.

The monitoring duration for monitoring SIB1 or the number of SIB1s monitored depends on the first information or is specified by the protocol, for example, it is specified that the terminal monitors X periods, or monitors Y slots.

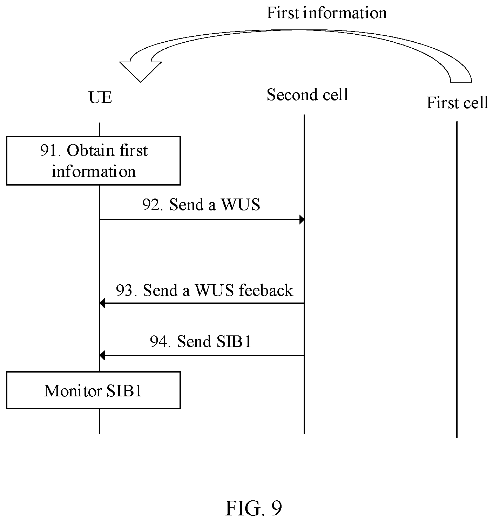

As an optional embodiment, before sending on-demand SIB1, the second cell may send feedback information of the first signal to the terminal, or may not send feedback information of the first signal. Taking the first signal being a WUS and the second cell sending WUS feedback information as an example, as shown in FIG. 9, the method for receiving on-demand SIB1 by the terminal includes:
Step 91: The UE obtains first information from the first cell, where the first information includes a WUS configuration and a SIB1 sending configuration of the second cell that is to be used after successful triggering by the WUS.
Step 92: The UE sends a WUS (using a specific preamble) on a RO configured in the first information.
Step 93: The second cell receives the WUS and sends a simplified Msg2 (simplified Msg2) as WUS feedback, and the UE receives the WUS feedback.
Step 94: The second cell sends SIB1, and the UE starts to monitor scheduling information for SIB1 at the 1st PDCCH occasion that is for scheduling SIB1 and closest to a time of receiving the WUS feedback.

The monitoring duration for monitoring SIB1 or the number of SIB1s monitored depends on the network side configuration or specified by the protocol.

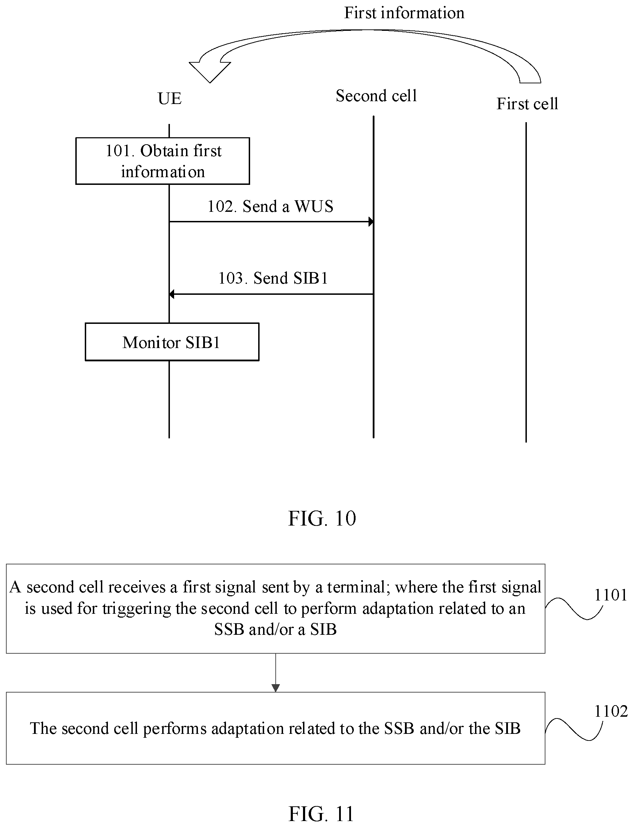

As another optional embodiment, taking the second cell not sending feedback information of the first signal before sending on-demand SIB1 as an example. As shown in FIG. 10, taking the first signal being a WUS as an example, the method for receiving on-demand SIB1 by the terminal includes:
Step 101: The UE obtains first information from the first cell, where the first information includes a WUS configuration and a SIB1 sending configuration of the second cell that is to be used after successful triggering by the WUS.
Step 102: The UE sends a WUS (specific preamble) on an SSB RO selected based on a measurement result.
Step 103: The second cell receives the WUS, and sends SIB1 in a direction of an SSB associated with the RO selected by the UE; and after sending the WUS, the UE starts, in X ms after WUS sending, monitoring Type 0 PDCCH associated with the SSB that is associated with the RO for sending the WUS.

The monitoring duration for monitoring SIB1 or the number of SIB1s monitored depends on the network side configuration or specified by the protocol.

Optionally, the direction in which the second cell sends the feedback information of the first signal, or the direction in which SIB1 PDCCH is sent, or the direction in which the successfully triggered SIB1 is sent is related to the occasion in which the UE sends the first signal.

Specifically: (1) If the occasion of the first signal is not mapped to an SSB, the sending direction of the first-signal feedback (feedback)/SIB1 PDCCH/SIB1 sent by the second cell is omnidirectional sending.

(2) If the occasion of the first signal is mapped to an SSB, the sending direction of the first-signal feedback/SIB1 PDCCH/SIB1 sent by the second cell is the direction of the SSB associated with the occasion of sending the first signal.

For example, the first signal is a WUS, and the UE selects the occasion associated with SSB index=1 to send the WUS; then the second cell sends downlink WUS feedback/SIB1 PDCCH/SIB1 in the direction of SSB index=1;
(3) If the occasion of the first signal is mapped to an SSB, the sending direction of the first-signal feedback/SIB1 PDCCH/SIB1 sent by the second cell is the direction of one or more SSBs near the SSB associated with the WUS sending occasion.

For example, the first signal is a WUS, and the UE selects the occasion associated with SSB index=1 to send the WUS; then the network side can send downlink WUS feedback/SIB1 PDCCH/SIB1 in the direction of SSB index=0,1,2.

The following describes the behavior of the terminal after sending of the first signal by using examples.

After sending the first signal on the target resource based on the first information obtained from the first cell and/or the second cell, the UE performs a target operation, where the first signal is used for triggering one or more second cells to send SIB1, and the SSB of the second cell is normally sent. The target operation including:
(1) The UE starts to monitor the Type 0 PDCCH associated with the SSB corresponding to the RO for sending the first signal;
(2) The UE starts blindly detecting scheduling information of RMSI (or SIB1) using SI-RNTI in the Type 0 CSS corresponding to CORESET 0; or the UE starts blindly detecting DCI 1_0 in the Type 0 CSS corresponding to CORESET 0.

In this embodiment, although the network side normally sends an SSB in an energy saving state, but does not send SIB1; therefore, the UE does not need to monitor the Type 0 PDCCH associated with the SSBs. After the UE meets a condition for sending the first signal, the UE needs to start to monitor the scheduling information for SIB1 by default. In this way, after sending the first signal, the UE starts blindly detecting the scheduling information of RMSI (or SIB1) using SI-RNTI in the Type 0 CSS corresponding to CORESET 0 associated with the SSB, or blindly detecting DCI 1_0, and only monitors the Type 0 PDCCH associated with the SSB corresponding to the RO for sending the first signal.

(3) The UE monitors the first signal feedback (feedback) at a corresponding position based on the first information or a prescription of the protocol, where the monitoring position of the first signal feedback and the information content of the first signal feedback are not repeated here.

(4) The UE does not monitor DCI scrambled by RA-RNTI (Msg2).

In this embodiment, although the UE sends Msg1 (preamble), this preamble is only used to wake up the second cell and is not for random access, so Msg2 is not needed as feedback for Msg1, and the UE does not need to monitor DCI scrambled by RA-RNTI (Msg2).

(5) The UE monitors DCI scrambled by RA-RNTI (MSg2).

In this embodiment, the UE sends Msg1 (preamble), but this preamble is only used to wake up the second cell and is not for RACH, and all RACH procedures do not need to be performed. The Msg2 or simplified Msg2 sent by the second cell can serve as a first signal feedback, so the UE needs to monitor DCI scrambled by RA-RNTI (Msg2) to determine whether to directly receive SIB1 next or to resend the first signal.

(6) After receiving a PDSCH (Msg2) carrying a RAR message, the UE does not send PUSCH transmission (Msg3) scheduled by the RAR UL Grant.

In this embodiment, the UE sends Msg1 (preamble), but this preamble is only used to wake up the base station and is not for RACH, and all RACH procedures do not need to be performed. The Msg2 or simplified Msg2 sent by the second cell can serve as a simple first signal feedback, so after sending the first signal, the terminal needs to monitor DCI scrambled by RA-RNTI (Msg2), and after monitoring the first signal feedback, does not perform the remaining random access procedure; therefore, the terminal no longer sends Msg3.

(7) The UE determines whether to resend the first signal based on a measurement result.

In this embodiment, if the UE does not receive the first signal feedback within the monitoring window, or does not detect the successfully triggered SSB or SIB1, the UE may send the first signal again.

(8) The UE receives on-demand SIB1 in type 1 CSS (that is, does not receive RAR, but receives SIB1 instead). The conventional use of Type 1 CSS is for receiving RACH PDCCH, which can be used in this application to receive PDCCH for scheduling SIB1.

(9) The UE receives on-demand SIB1 in an SS dedicated to on-demand SIB1 reception; for example, one dedicated search space NES is configured specifically for receiving on-demand SIB1.

(10) The UE determines validity of the RO of the second cell based on a TDD configuration of the second cell included in the first information.

In the existing solution, the validity of the RO is determined according to the following rules:
a: If the UE does not receive a tdd-UL-DL-Configuration, the RACH occasion is valid when the following conditions are met.
   The UE does not process an SSB in a RACH slot corresponding to the RACH occasion, and the RACH occasion is separated from a nearest previous SSB by at least Ngap symbols; where if the preamble SCS is 1.25 KHz or 5 KHz, or the preamble format (preamble format) is B4, Ngap is 0; if the preamble SCS is 15 KHz, 30 KHz, 60 KHz, or 120 KHz, Ngap is 2.
b: If the UE has received a tdd-UL-DL-Configuration, the RACH occasion is valid when one of the following conditions are met.

The RACH occasion is within the range of UL symbols.

The UE does not process an SSB in the RACH slot corresponding to the RACH occasion, the RACH occasion is separated from the nearest previous SSB by at least Ngap symbols, and the RACH occasion is separated from the nearest previous DL symbol by at least Ngap symbols; then the RACH occasion is valid. The value of Ngap is not repeated here.

In the existing solution, the determining of RO validity needs to avoid collision with uplink slots configured by tdd-UL-DL-Configuration, but before obtaining SIB1 of the second cell, the UE cannot obtain tdd-UL-DL-Configuration of the second cell. Therefore, in this application, tdd-UL-DL-Configuration of the second cell (or called target cell) can be provided by the first cell, and the UE determines which ROs are valid according to the tdd-UL-DL-Configuration of the second cell provided by the first cell.

(11) The UE determines, according to the TDD configuration of the second cell included in the first information, a valid uplink occasion for sending the first signal.

In the embodiments of this application, a UE behavior after the UE sends a first signal is provided, as well as a direction in which the network side sends a SIB. The direction for sending the SIB is related to an RO in which the UE sends the first signal, which can avoid the network side sending SIB omnidirectionally and improve the accuracy of SIB reception by the UE. In this application, SIB sending status information of the target cell can be carried in the SSB to help the UE determine whether the target cell can be triggered by sending the first signal to send a SIB.

As shown in FIG. 11, an embodiment of this application provides a method for triggering a cell to send an SSB and/or a SIB, where the method is performed by a second cell and includes:
Step 1101: The second cell receives a first signal sent by a terminal; where the first signal is used for triggering the second cell to perform adaptation related to an SSB and/or a SIB.
Step 1102: The second cell performs adaptation related to the SSB and/or the SIB.

In this embodiment, the terminal sends the first signal to the second cell, where the first signal is used for triggering the second cell to perform adaptation related to the SSB and/or the SIB. After receiving the first signal, the second cell may perform adaptation related to the SSB and/or the SIB.

Optionally, the first signal may be an uplink wake-up signal WUS sent by the UE, and the first signal may be in a form of a preamble sequence.

As an optional embodiment, the performing adaptation related to the SSB and/or SIB includes:
adapting from not sending an SSB to sending an SSB;
adapting from not sending a SIB to sending a SIB;
adapting from sending a long-period SSB to sending a short-period SSB;
adapting from sending a long-period SIB to sending a short-period SIB; and
adapting from sending only a PSS and an SSS to sending a normal SSB.

In this embodiments, after receiving the first signal, the second cell may perform one or more of the above adaptation operations. For example: the second cell originally does not send an SSB, and after receiving the first signal, adapts to send an SSB; or the second cell originally sends a long-period SSB, and after receiving the first signal, adapts to send a short-period SSB.

Optionally, after the receiving a first signal sent by a terminal, the method further includes: sending feedback information of the first signal to the terminal.

In this embodiment, after receiving the first signal, the second cell may send feedback information of the first signal to the terminal or may not send the feedback information of the first signal

Optionally, the feedback information of the first signal includes at least one of the following:
1) Simplified Msg2 (Simplified Msg2), where the simplified Msg2 includes a random access preamble identifier RAPID; and the simplified Msg2 may include only the RAPID, while the legacy Msg2 (Legacy Msg2) includes RAPID, TA command (command), uplink grant (UL grant), BI, or the like.
2) SSB index (SSB index), where the SSB index may be used to notify the UE that a direction for sending subsequent SIBs may refer to a sending direction of the SSB index.
3) RAPID, where if the RAPID is the same as an ID of a preamble of the first signal sent by the terminal, the terminal considers that sending of the first signal is successful, and if not the same, the terminal considers that sending of the first signal fails.
4) SIB direction information; for example, quasi co-location (quasi co-location, QCL) information, used to inform the terminal of the sending direction of the subsequent SIB.
5) First indication information, used for indicating that the terminal does not need to resend the first signal, where the first indication information is DCI or a media access control control element (MAC CE); and the first indication information may be a dedicated first signal feedback (DCI), used to inform the terminal that the second cell has woken up and does not need to resend the first signal. Optionally, 1-bit information may be used to indicate whether a current SIB is in a normal sending state.
6) A PDSCH carrying a SIB after successful triggering, where the terminal may learn, based on the feedback information, the PDSCH of the SIB after successful triggering.
7) Type 0 common search space PDCCH (Type 0 CSS PDCCH), where the terminal may monitor Type 0 CSS PDCCH based on the feedback information.

Optionally, the sending direction of the feedback information of the first signal includes at least one of the following:
a direction of an SSB associated with an occasion at which the terminal sends the first signal;
a direction of one or more adjacent SSBs of the SSB associated with the occasion at which the terminal sends the first signal; and
all directions.

In this embodiment, the second cell may send the first signal feedback (feedback) according to the direction of the SSB associated with the occasion at which the terminal sends the first signal; then the terminal may receive the first signal feedback in the direction of the SSB associated with the occasion at which the first signal is sent. The second cell may send the first signal feedback according to the direction of one or more adjacent SSBs of the SSB associated with the occasion at which the terminal sends the first signal; then the terminal may receive the first signal feedback in the direction of one or more adjacent SSBs of the SSB associated with the occasion at which the first signal is sent. The second cell may send the first signal feedback omnidirectionally, then the terminal may receive the first signal feedback omnidirectionally.

In an optional embodiment, the method further includes:
sending first information to the terminal, where the first information is used for the terminal to perform a target operation after sending the first signal to the second cell; where
the first information includes at least one of the following:
   a second-cell identifier;
   the second cell supporting or not supporting on-demand SIB;
   the second cell supporting or not supporting on-demand SSB;
   a TDD configuration of the second cell;
   a unified access control UAC configuration;
   a cell barring (bar) configuration;
   a first signal configuration for triggering SSB sending;
   a first signal configuration for triggering SSB adaptation;
   a first signal configuration for triggering SIB sending;
   a first signal configuration for triggering SIB adaptation;
   triggering condition information of a first signal;
   a SIB configuration of the second cell after successful triggering by the first signal; and
   an SSB configuration of the second cell after successful triggering by the first signal.

In this embodiment, the first information corresponds to one or more second cells, and the first information can be explicitly configured by the second cell through broadcast information. Optionally, the first signal configuration is configured per cell, or is configured per cell group.

Optionally, the SIB configuration of the second cell after successful triggering by the first signal includes at least one of the following:
a SIB periodicity;
a control resource set 0 configuration;
a search space 0 configuration;
a type 0 PDCCH configuration;
a SIB monitoring window;
a time length for transmitting a SIB;
the number of times for sending a SIB;
the number of periods for sending a SIB;
frequency domain information of a SIB;
time domain information of a SIB; and
a SIB sending mode.

Optionally, the SIB sending mode includes at least one of the following:
a normal SIB sending mode;
a simplified SIB sending mode;
a clustered SIB sending mode; and
a long-period SIB sending mode.

Optionally, the SSB configuration of the second cell after successful triggering by the first signal includes at least one of the following:
a frequency for sending an SSB;
a time domain index or time domain position for sending an SSB;
an SSB monitoring window;
a time length for transmitting an SSB;
the number of times for sending an SSB;
the number of periods for sending an SSB;
a time domain relationship between a triggered SSB and an SSB of a first carrier; where the first carrier is a carrier that is used by the terminal for time-frequency reference synchronization for the second cell;
a frequency domain relationship between the triggered SSB and the SSB of the first carrier;
a spatial domain relationship between the triggered SSB and the SSB of the first carrier;
a time domain position for sending the 1st SSB; and
an SSB sending mode.

Optionally, the SSB sending mode includes at least one of the following:
a normal SSB sending mode;
a simplified SSB sending mode;
a clustered SSB sending mode; and
a long-period SSB sending mode.

As an optional embodiment, the first signal configuration includes at least one of the following:
(1) A configuration for monitoring feedback information of the first signal; where an example of the feedback information of the first signal is PDCCH of Msg2.

Optionally, the configuration for monitoring feedback information of the first signal includes at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

(2) A sending configuration of the first signal.

Optionally, the sending configuration of the first signal includes at least one of the following:
1) Signal synchronization reference configuration, which may include at least one of the following: an SSB of the first carrier, CSI-RS, TRS, GPS timing (timing), and the like.
2) Signal type configuration, for example, RACH, SRS, or PUCCH.
3) Signal time domain resource configuration.
4) Signal frequency domain resource configuration.
5) Signal sequence configuration, for example, including a preamble index (preamble index) or a preamble index range or a preamble group index (preamble group index); for example, performing preamble grouping and indicating a preamble group index, which indicates that the preamble group is used for triggering sending of an SSB of a second carrier or a carrier group.
6) Signal power configuration.

Optionally, the signal power configuration includes at least one of the following:
an initial signal power;
a power ramping step size of a signal power;
the number of repetitions corresponding to each signal sending; and
the maximum number of repetitions for signal transmission.

7) Signal spatial domain parameter configuration.

The signal spatial domain parameter configuration may include at least one of the following: a correspondence between the signal and the SSB of the first carrier or the second carrier or the carrier group; and a signal sending timer (Timer) configuration. The Timer is used to avoid too frequent sending of the first signal, the Timer is started after sending the first signal, and repeated sending of the first signal is not allowed before the Timer expires.

As an optional embodiment, the receiving a first signal sent by a terminal includes:
receiving, on a target resource, the first signal sent by the terminal; where the target resource is carried in the first information, or specified by a protocol.
the target resource includes at least one of the following:
   a resource for random access in the second cell; where the second cell may receive the first signal on the resource for random access of the second cell;
   part of occasions in a resource for random access in the second cell; where the second cell may receive the first signal on part of occasions in the resource for random access of the second cell;
   one occasion in a resource for random access in the second cell; where the second cell may receive the first signal on one occasion in the resource for random access of the second cell; and
   a resource only for receiving the first signal, and not a resource for random access in the second cell. Optionally, this resource is completely independent of the resource for random access of the second cell, and is a resource dedicated to sending or receiving the first signal.

As an optional embodiment, in a case of sending a SIB to the terminal, a sending direction of a PDCCH of the SIB and/or a sending direction of the SIB includes at least one of the following:
a direction of an SSB associated with an occasion at which the terminal sends the first signal;
a direction of one or more adjacent SSBs of the SSB associated with the occasion at which the terminal sends the first signal; and
all directions.

In this embodiment, the second cell may send the PDCCH of SIB and/or the SIB according to the direction of the SSB associated with the occasion at which the terminal sends the first signal; then the terminal may receive the PDCCH of SIB and/or the SIB in the direction of the SSB associated with the occasion at which the first signal is sent. The second cell may send the PDCCH of SIB and/or the SIB according to the direction of one or more adjacent SSBs of the SSB associated with the occasion at which the terminal sends the first signal; then the terminal may receive the PDCCH of SIB and/or the SIB in the direction of one or more adjacent SSBs of the SSB associated with the occasion at which the first signal is sent. The second cell may send the PDCCH of SIB and/or the SIB omnidirectionally; then the terminal may receive the PDCCH of SIB and/or the SIB omnidirectionally.

Optionally, the method further includes: sending an SSB to the terminal, where the SSB carries second information, and the second information is used to indicate a SIB sending status of the second cell, where the SIB sending status of the second cell includes at least one of the following:
a state of sending a SIB;
a state of not sending a SIB;
supporting an on-demand SIB mode; and
not supporting an on-demand SIB mode.

It should be noted that the second cell in this embodiment can implement the technical solutions related to the second cell in the method embodiments executed by the terminal described above, with the same or corresponding technical effects achieved. To avoid repetition, details are not described herein.

In the embodiments of this application, a direction in which the network side sends a SIB is provided. The direction for sending the SIB is related to an RO in which the UE sends the first signal, which can avoid the network side sending SIB omnidirectionally and improve the accuracy of SIB reception by the UE. In this application, SIB sending status information of the target cell can be carried in the SSB to help the UE determine whether the target cell can be triggered by sending the first signal to send a SIB.

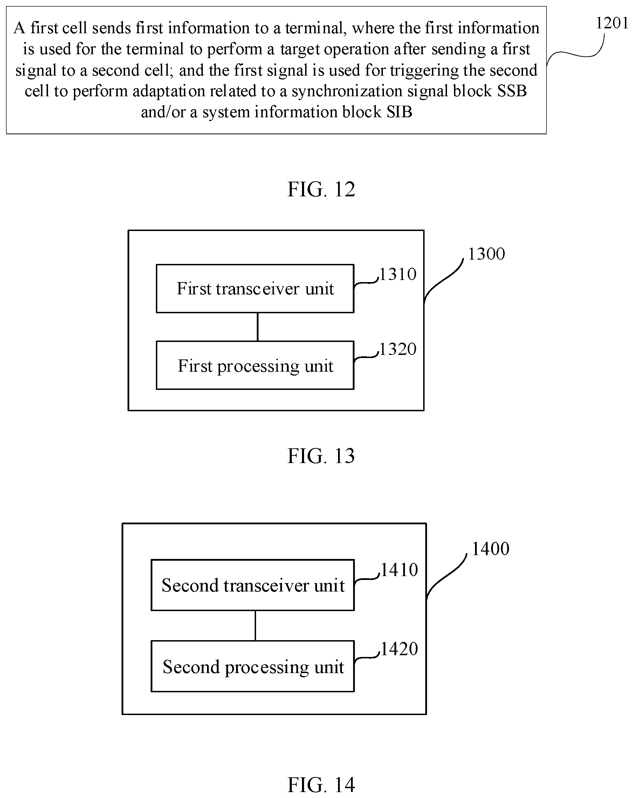

As shown in FIG. 12, an embodiment of this application provides a method for triggering a cell to send an SSB and/or a SIB, where the method is performed by a first cell and includes:
Step 1201: The first cell sends first information to a terminal, where the first information is used for the terminal to perform a target operation after sending a first signal to a second cell; and the first signal is used for triggering the second cell to perform adaptation related to a synchronization signal block SSB and/or a system information block SIB.

In this embodiment, the first cell sends the first information to the terminal, and the terminal can perform the target operation based on the first information after sending the first signal to the second cell. The terminal sends the first signal to the second cell, and after sending the first signal, the terminal may perform the target operation based on the first information, where the first signal is used for triggering one or more second cells to perform adaptation related to the SSB and/or the SIB.

Optionally, the first signal may be an uplink wake-up signal WUS sent by the UE, and the first signal may be in a form of a preamble sequence.

Optionally, the first information includes at least one of the following:
a second-cell identifier;
the second cell supporting or not supporting on-demand SIB;
the second cell supporting or not supporting on-demand SSB;
a TDD configuration of the second cell;
a unified access control UAC configuration;
a cell barring configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal.

In this embodiment, the first information corresponds to one or more second cells, and the first information can be explicitly configured by the first cell through broadcast information, or may default to the same as corresponding information content of the first cell. Optionally, the first signal configuration is configured per cell, or is configured per cell group.

Optionally, the SIB configuration of the second cell after successful triggering by the first signal includes at least one of the following:
a SIB periodicity;
a control resource set 0 configuration;
a search space 0 configuration;
a type 0 PDCCH configuration;
a SIB monitoring window;
a time length for transmitting a SIB;
the number of times for sending a SIB;
the number of periods for sending a SIB;
frequency domain information of a SIB;
time domain information of a SIB; and
a SIB sending mode.

Optionally, the SIB sending mode includes at least one of the following:
a normal SIB sending mode, which is a conventional SIB sending mode relative to a simplified SIB sending mode;
a simplified SIB sending mode, for example, only for sending core configurations such as RACH;
a clustered SIB sending mode, for example, no time domain gap (gap) between multiple SIBs; and
a long-period SIB sending mode, that is, a period for sending SIB1 is relatively long.

Optionally, the SSB configuration of the second cell after successful triggering by the first signal includes at least one of the following:
a frequency for sending an SSB;
a time domain index or time domain position for sending an SSB;
an SSB monitoring window;
a time length for transmitting an SSB;
the number of times for sending an SSB;
the number of periods for sending an SSB;
a time domain relationship between a triggered SSB and an SSB of a first carrier; where the first carrier is a carrier that is used by the terminal for time-frequency reference synchronization for the second cell;
a frequency domain relationship between the triggered SSB and the SSB of the first carrier;
a spatial domain relationship between the triggered SSB and the SSB of the first carrier;
a time domain position for sending the 1st SSB; and
an SSB sending mode.

Optionally, the SSB sending mode includes at least one of the following:
a normal SSB sending mode, which is a conventional SSB sending mode relative to a simplified SSB sending mode;
a simplified SSB sending mode; for example, only sending a PSS and an SSS;
a clustered SSB sending mode, for example, no time domain gap between multiple SSBs; and
a long-period SSB sending mode, where, for example, a period for sending the SSB by the second cell is relatively long.

As an optional embodiment, the first signal configuration includes at least one of the following:
(1) A configuration for monitoring feedback information of the first signal; where an example of the feedback information of the first signal is PDCCH of Msg2.

Optionally, the configuration for monitoring feedback information of the first signal includes at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

(2) A sending configuration of the first signal.

Optionally, the sending configuration of the first signal includes at least one of the following:
1) Signal synchronization reference configuration, which may include at least one of the following: an SSB of the first carrier, CSI-RS, TRS, GPS timing (timing), and the like.
2) Signal type configuration, for example, RACH, SRS, or PUCCH.
3) Signal time domain resource configuration.
4) Signal frequency domain resource configuration.
5) Signal sequence configuration, for example, including a preamble index (preamble index) or a preamble index range or a preamble group index (preamble group index); for example, preamble grouping, indicating a preamble group index, which indicates that the preamble group is used for triggering sending of an SSB of a second carrier or a carrier group.
6) Signal power configuration.

Optionally, the signal power configuration includes at least one of the following:
an initial signal power;
a power ramping step size of a signal power;
the number of repetitions corresponding to each signal sending; and
the maximum number of repetitions for signal transmission.

7) Signal spatial domain parameter configuration.

The signal spatial domain parameter configuration may include at least one of the following: a correspondence between the signal and the SSB of the first carrier or the second carrier or the carrier group; and a signal sending timer (Timer) configuration. The Timer is used to avoid too frequent sending of the first signal, the Timer is started after sending the first signal, and repeated sending of the first signal is not allowed before the Timer expires.

It should be noted that the first cell in this embodiment can implement all the technical solutions related to the first cell in the method embodiments executed by the terminal described above, with the same or corresponding technical effects achieved. To avoid repetition, details are not described herein.

In this embodiment of this application, the first cell sends the first information to the terminal, so that the terminal can perform the target operation based on the first information after sending the first signal to the second cell. The first signal is used for triggering one or more second cells to perform the adaptation related to the SSB and/or the SIB; and after sending the first signal, the terminal may perform the target operation based on the first information from the first cell and/or the second cell, thereby ensuring accurate reception of the SSB and/or the SIB sent by the second cell.

In the method for triggering a cell to send an SSB and/or a SIB provided by the embodiments of this application, the execution subject may be an apparatus for triggering a cell to send an SSB and/or a SIB. In the embodiments of this application, the apparatus for triggering a cell to send an SSB and/or a SIB is described by using the method for triggering a cell to send an SSB and/or a SIB executed by the apparatus as an example.

As shown in FIG. 13, an embodiment of this application provides an apparatus 1300 for triggering a cell to send an SSB and/or a SIB, applied to a terminal. The apparatus includes:
a first transceiver unit 1310, configured to send a first signal to a second cell; and
a first processing unit 1320, configured to perform a target operation based on first information from a first cell and/or the second cell; where
the first signal is used for triggering the second cell to perform an adaptation related to an SSB and/or a SIB, and the first cell and the second cell are different cells; and
the target operation includes at least one of the following:
   receiving, at a first position, an SSB and/or SIB sent by the second cell, where the first position is determined based on the first information or specified by a protocol;
   receiving, in a first direction, an SSB and/or SIB sent by the second cell, where the first direction is a direction corresponding to an SSB index carried in feedback information of the first signal;
   receiving, in a second direction, an SSB and/or SIB sent by the second cell, where the second direction is a direction corresponding to an SSB associated with an occasion at which the first signal is sent;
   starting to monitor a type 0 PDCCH associated with a target SSB, where the target SSB is an SSB associated with a RO at which the first signal is sent;
   blindly detecting scheduling information for RMSI using a SI-RNTI in a Type 0 CSS corresponding to a control resource set 0;
   blindly detecting DCI 1_0 in a Type 0 CSS corresponding to a control resource set 0;
   receiving feedback information of the first signal at a second position, where the second position is determined according to a configuration of the first signal or specified by a protocol;
   skipping detection of DCI scrambled by a random access RNTI;
   detecting DCI scrambled by a random access RNTI;
   resending the first signal under a first condition, where the first condition includes: the terminal does not receive, within a RAR time window, a second message Msg2 for contention-based random access;
   after receiving a PDSCH carrying a RAR message, not sending a PUSCH transmission scheduled by an RAR uplink grant;
   after receiving Msg2, not sending a third message Msg3 for contention-based random access;
   receiving an on-demand SIB in a type 1 CSS;
   receiving an on-demand SIB in a target search space, where the target search space is a search space dedicated to receiving the on-demand SIB;
   determining validity of an RO of the second cell according to time division duplex TDD configuration information of the second cell, where the TDD configuration information is from the first cell; and
   determining a valid uplink occasion for sending the first signal according to TDD configuration information of the second cell, where the TDD configuration information is from the first cell.

Optionally, the adaptation related to the SSB and/or SIB includes:
adapting from not sending an SSB to sending an SSB;
adapting from not sending a SIB to sending a SIB;
adapting from sending a long-period SSB to sending a short-period SSB;
adapting from sending a long-period SIB to sending a short-period SIB; and
adapting from sending only a PSS and an SSS to sending an SSB.

Optionally, a relationship between the first cell and the second cell includes one of the following:
the first cell and the second cell are intra-frequency cells;
the first cell and the second cell are inter-frequency cells;
the first cell and the second cell belong to a same cell group;
the first cell and the second cell belong to a same timing advance group TAG; and
the first cell and the second cell belong to a same tracking area.

Optionally, the apparatus further includes:
a first obtaining unit, configured to obtain second information, where the second information is carried in an SSB sent by the second cell; and
a first determining unit, configured to determine a SIB sending status of the second cell based on the second information, where the SIB sending status of the second cell includes at least one of the following:
   a state of sending a SIB;
   a state of not sending a SIB;
   supporting an on-demand SIB mode; and
   not supporting an on-demand SIB mode;

Optionally, a manner in which the SSB of the second cell carries the second information includes at least one of the following:
being indicated by a synchronization sequence included in the SSB of the second cell;
being indicated by an existing target field in a PBCH of the SSB of the second cell;
being indicated by a newly added payload in the synchronization sequence included in the SSB of the second cell;
being indicated by a newly added payload in the PBCH of the SSB of the second cell; and
being implicitly indicated by a PBCH demodulation reference signal DMRS included in the SSB of the second cell; where there is a mapping relationship between a DMRS sequence of the PBCH and a SIB or SSB sending status.

Optionally, a specific value of an existing target field in a master information block MIB carried by the PBCH has a one-to-one mapping relationship with the SIB sending status.

Optionally, the first information includes at least one of the following:
a second-cell identifier;
the second cell supporting or not supporting on-demand SIB;
the second cell supporting or not supporting on-demand SSB;
a TDD configuration of the second cell;
a unified access control UAC configuration;
a cell barring (bar) configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal.

Optionally, the SIB configuration of the second cell after successful triggering by the first signal includes at least one of the following:
a SIB periodicity;
a control resource set 0 configuration;
a search space 0 configuration;
a type 0 PDCCH configuration;
a SIB monitoring window;
a time length for transmitting a SIB;
the number of times for sending a SIB;
the number of periods for sending a SIB;
frequency domain information of a SIB;
time domain information of a SIB; and
a SIB sending mode.

Optionally, the SIB sending mode includes at least one of the following:
a normal SIB sending mode;
a simplified SIB sending mode;
a clustered SIB sending mode; and
a long-period SIB sending mode.

Optionally, the SSB configuration of the second cell after successful triggering by the first signal includes at least one of the following:
a frequency for sending an SSB;
a time domain index or time domain position for sending an SSB;
an SSB monitoring window;
a time length for transmitting an SSB;
the number of times for sending an SSB;
the number of periods for sending an SSB;
a time domain relationship between a triggered SSB and an SSB of a first carrier; where the first carrier is a carrier capable of serving as a time-frequency reference synchronization for the second cell;
a frequency domain relationship between the triggered SSB and the SSB of the first carrier;
a spatial domain relationship between the triggered SSB and the SSB of the first carrier;
a time domain position for sending the 1st SSB; and
an SSB sending mode.

Optionally, the SSB sending mode includes at least one of the following:
a normal SSB sending mode;
a simplified SSB sending mode;
a clustered SSB sending mode; and
a long-period SSB sending mode.

Optionally, the first signal configuration includes at least one of the following:
a configuration for monitoring feedback information of the first signal; and
a sending configuration of the first signal.

Optionally, the configuration for monitoring feedback information of the first signal includes at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

Optionally, the sending configuration of the first signal includes at least one of the following:
a signal synchronization reference configuration;
a signal type configuration;
a signal time domain resource configuration;
a signal frequency domain resource configuration;
a signal sequence configuration;
a signal power configuration; and
a signal spatial domain parameter configuration.

Optionally, the signal power configuration includes at least one of the following:
an initial signal power;
a power ramping step size of a signal power;
the number of repetitions corresponding to each signal sending; and
the maximum number of repetitions for signal transmission.

Optionally, the first signal configuration is configured per cell, or is configured per cell group.

Optionally, in a case that the target operation is receiving, at the first position, the SSB and/or SIB sent by the second cell, the first position includes at least one of the following:
being X time units after sending of the first signal, where X is greater than 0;
being Y time units after receiving of the feedback information of the first signal, where Y is greater than 0;
being a time position determined based on SIB scheduling information that is monitored at a third position, where the third position is the 1st PDCCH occasion, for scheduling a SIB, closest to a time point of sending the first signal;
being a time position determined based on SIB scheduling information that is monitored at a fourth position, where the fourth position is the 1st PDCCH occasion, for scheduling SIB, closest to a time point of receiving the feedback information of the first signal;
being within a timing duration of a first timer started after sending of the first signal;
being a time after a second timer started after sending of the first signal expires;
being within a monitoring window that is enabled Z time units after sending of the first signal, where Z is greater than 0; and
being within a monitoring window enabled after receiving of the feedback information of the first signal; where
values of X, Y, and Z are configured by a network-side device, or specified by a protocol, or included in the first signal configuration;
a timing duration of the first timer and/or the second timer is configured by a network-side device, or specified by a protocol, or included in the first signal configuration;
a starting position, an ending position, and a duration of the monitoring window are configured by a network-side device, or specified by a protocol, or included in the first signal configuration.

Optionally, a value of at least one of X, Y, and Z includes: a predefined value and a target offset value; and
the target offset value is determined based on the 1st SSB or SIB of a next SSB or SIB period sent by the second cell after sending of the first signal.

Optionally, in a case that the target operation is receiving the feedback information of the first signal at the second position, the second position includes at least one of the following:
being Q time units after sending of the first signal, where a value of Q is configured by a network-side device, or specified by a protocol, or included in the first signal configuration;
being a time point after a third timer started after sending of the first signal expires;
being within a timing duration of a fourth timer started after sending of the first signal; and
being within a monitoring window started after sending of the first signal; where
a timing duration of the third timer and/or the fourth timer is configured by a network-side device, or specified by a protocol, or included in the first signal configuration; and
a starting position, an ending position, and a duration of the monitoring window are configured by a network-side device, or specified by a protocol, or included in the first signal configuration.

Optionally, a starting time point for monitoring the type 0 physical downlink control channel PDCCH includes at least one of the following:
the 1st PDCCH occasion after sending of the first signal;
the 1st PDCCH occasion being S time units after sending of the first signal, where S is greater than 0;
the 1st PDCCH occasion being T time units after receiving of the feedback information of the first signal, where T is greater than 0;
the 1st symbol of an earliest control resource set for receiving the type 0 PDCCH after sending of the first signal;
the 1st symbol of an earliest control resource set for receiving the type 0 PDCCH that is U time units after sending of the first signal, where U is greater than 0;
the 1st symbol of an earliest control resource set for receiving the type 0 PDCCH that is V time units after receiving of the feedback information of the first signal, where V is greater than 0;
a time point after a fifth timer started subsequent to sending of the first signal expires; and
a time point after receiving of the feedback information of the first signal; where
values of S, T, U, and V are configured by a network-side device, or specified by a protocol, or included in the first signal configuration; and
a timing duration of the fifth timer is configured by a network-side device, or specified by a protocol, or included in the first signal configuration.

Optionally, the first transceiver unit is specifically configured to:
send the first signal to the second cell based on a second condition; where
the second condition includes at least one of the following:
   cell selection is performed;
   cell reselection is performed;
   after cell selection or cell reselection has been performed, the terminal needs to access the second cell, the second cell is a cell supporting on-demand SIB, and the terminal has received the first signal configuration for triggering the second cell to send a SIB;
   the terminal has received the first signal configuration for triggering the second cell to send a SIB;
   the terminal has received the first signal configuration for triggering the second cell to send a SIB, and the second cell supports on-demand SIB sending;
   the terminal has received the first signal configuration for triggering the second cell to send a SIB, and the second cell is configured as barred;
   the terminal has received the first signal configuration for triggering the second cell to send a SIB, the second cell is configured as barred, and the terminal needs to access the second cell;
   the terminal has received the first signal configuration for triggering the second cell to send a SIB, and the terminal is not allowed to camp on a current cell;
   the terminal has received the first signal configuration for triggering the second cell to send a SIB, the terminal is not allowed to camp on a current cell, and the second cell is a suitable cell;
   the terminal has received the first signal configuration for triggering the second cell to send a SIB, and the terminal needs to send a physical random access channel PRACH on the second cell;
   the terminal has received the first signal configuration for triggering the second cell to send a SIB, and the first information or second information indicates that the second cell is in a state of barring the terminal from camping;
   the first cell does not satisfy a camping condition, and the terminal has received the first signal configuration for triggering the second cell to send a SIB;
   the terminal initiates random access; and
   the terminal determines that the first cell is not allowed for camping, and the second cell is a suitable cell.

Optionally, the first transceiver unit is specifically configured to:
send the first signal to the second cell on a target resource; where
the target resource includes at least one of the following:
   a resource for random access in the second cell;
   part of occasions in a resource for random access in the second cell;
   one occasion in a resource for random access in the second cell; and
   a resource only for sending the first signal, and not a resource for random access in the second cell; where
   the target resource is carried in the first information, or specified by a protocol.

Optionally, the first transceiver unit is specifically configured to perform at least one of the following:
selecting, based on a reference signal measurement result of the second cell; an RO corresponding to an SSB and sending the first signal;
sending the first signal on a time domain resource dedicated to sending the first signal;
sending the first signal on a frequency domain resource dedicated to sending the first signal; and
sending the first signal on an RO associated with a target SSB index, where the target SSB index is configured by a network-side device, or specified by a protocol, or included in the first signal configuration.

Optionally, the feedback information of the first signal includes at least one of the following:
a simplified Msg2, where the simplified Msg2 includes a random access preamble identifier RAPID;
an SSB index;
a RAPID;
SIB direction information;
first indication information, used for indicating that the terminal does not need to resend the first signal, where the first indication information is DCI or a media access control control element (MAC CE);
a PDSCH carrying a SIB after successful triggering; and
a type 0 PDCCH common search space.

Optionally, a receiving direction of the feedback information of the first signal includes at least one of the following:
a direction of an SSB associated with an occasion at which the terminal sends the first signal;
a direction of one or more adjacent SSBs of the SSB associated with the occasion at which the terminal sends the first signal; and
all directions.

Optionally, in a case that the terminal receives the SIB sent by the second cell, a receiving direction of a PDCCH of the SIB and/or a receiving direction of the SIB includes at least one of the following:
a direction of an SSB associated with an occasion at which the terminal sends the first signal;
a direction of one or more adjacent SSBs of the SSB associated with the occasion at which the terminal sends the first signal; and
all directions.

Optionally, the SIB includes SIB1.

The apparatus for triggering a cell to send an SSB and/or a SIB in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The apparatus for triggering a cell to send an SSB and/or a SIB provided in this embodiment of this application can implement the processes implemented in the method embodiment in FIGs. 3 to 10, with the same technical effects achieved. To avoid repetition, details are not described herein again.

As shown in FIG. 14, an embodiment of this application provides an apparatus 1400 for triggering a cell to send an SSB and/or a SIB, applied to a second cell. The apparatus includes:
a second transceiver unit 1410, configured to receive a first signal sent by a terminal; where the first signal is used for triggering the second cell to perform adaptation related to an SSB and/or a SIB; and
a second processing unit 1420, configured to perform adaptation related to the SSB and/or the SIB.

Optionally, the apparatus further includes:
a third transceiver unit, configured to send feedback information of the first signal to the terminal.

Optionally, the apparatus further includes:
a fourth transceiver unit, configured to send first information to the terminal, where the first information is used for the terminal to perform a target operation after sending the first signal to the second cell; where
the first information includes at least one of the following:
   a second-cell identifier;
   the second cell supporting or not supporting on-demand SIB;
   the second cell supporting or not supporting on-demand SSB;
   a TDD configuration of the second cell;
   a unified access control UAC configuration;
   a cell barring (bar) configuration;
   a first signal configuration for triggering SSB sending;
   a first signal configuration for triggering SSB adaptation;
   a first signal configuration for triggering SIB sending;
   a first signal configuration for triggering SIB adaptation;
   triggering condition information of a first signal;
   a SIB configuration of the second cell after successful triggering by the first signal; and
   an SSB configuration of the second cell after successful triggering by the first signal.

Optionally, the SIB configuration of the second cell after successful triggering by the first signal includes at least one of the following:
a SIB periodicity;
a control resource set 0 configuration;
a search space 0 configuration;
a type 0 PDCCH configuration;
a SIB monitoring window;
a time length for transmitting a SIB;
the number of times for sending a SIB;
the number of periods for sending a SIB;
frequency domain information of a SIB;
time domain information of a SIB; and
a SIB sending mode.

Optionally, the SIB sending mode includes at least one of the following:
a normal SIB sending mode;
a simplified SIB sending mode;
a clustered SIB sending mode; and
a long-period SIB sending mode.

Optionally, the SSB configuration of the second cell after successful triggering by the first signal includes at least one of the following:
a frequency for sending an SSB;
a time domain index or time domain position for sending an SSB;
an SSB monitoring window;
a time length for transmitting an SSB;
the number of times for sending an SSB;
the number of periods for sending an SSB;
a time domain relationship between a triggered SSB and an SSB of a first carrier; where the first carrier is a carrier that is used by the terminal for time-frequency reference synchronization for the second cell;
a frequency domain relationship between the triggered SSB and the SSB of the first carrier;
a spatial domain relationship between the triggered SSB and the SSB of the first carrier;
a time domain position for sending the 1st SSB; and
an SSB sending mode.

Optionally, the SSB sending mode includes at least one of the following:
a normal SSB sending mode;
a simplified SSB sending mode;
a clustered SSB sending mode; and
a long-period SSB sending mode.

Optionally, the first signal configuration includes at least one of the following:
a configuration for monitoring feedback information of the first signal; and
a sending configuration of the first signal.

Optionally, the configuration for monitoring feedback information of the first signal includes at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

Optionally, the sending configuration of the first signal includes at least one of the following:
a signal synchronization reference configuration;
a signal type configuration;
a signal time domain resource configuration;
a signal frequency domain resource configuration;
a signal sequence configuration;
a signal power configuration; and
a signal spatial domain parameter configuration.

Optionally, the signal power configuration includes at least one of the following:
an initial signal power;
a power ramping step size of a signal power;
the number of repetitions corresponding to each signal sending; and
the maximum number of repetitions for signal transmission.

Optionally, the second transceiver unit is specifically configured to:
receive, on a target resource, the first signal sent by the terminal; where
the target resource includes at least one of the following:
   a resource for random access in the second cell;
   part of occasions in a resource for random access in the second cell;
   one occasion in a resource for random access in the second cell; and
   a resource only for receiving the first signal, and not a resource for random access in the second cell.

Optionally, in a case of sending a SIB to the terminal, a sending direction of a PDCCH of the SIB and/or a sending direction of the SIB includes at least one of the following:
a direction of an SSB associated with an occasion at which the terminal sends the first signal;
a direction of one or more adjacent SSBs of the SSB associated with the occasion at which the terminal sends the first signal; and
all directions.

Optionally, the sending direction of the feedback information of the first signal includes at least one of the following:
a direction of an SSB associated with an occasion at which the terminal sends the first signal;
a direction of one or more adjacent SSBs of the SSB associated with the occasion at which the terminal sends the first signal; and
all directions.

Optionally, the feedback information of the first signal includes at least one of the following:
a simplified Msg2, where the simplified Msg2 includes a RAPID;
an SSB index;
a RAPID;
SIB direction information;
first indication information, used for indicating that the terminal does not need to resend the first signal, where the first indication information is DCI or a MAC CE;
a PDSCH carrying a SIB after successful triggering; and
a type 0 PDCCH common search space.

Optionally, the adaptation related to the SSB and/or SIB includes:
adapting from not sending an SSB to sending an SSB;
adapting from not sending a SIB to sending a SIB;
adapting from sending a long-period SSB to sending a short-period SSB;
adapting from sending a long-period SIB to sending a short-period SIB; and
adapting from sending only a PSS and an SSS to sending a normal SSB.

The apparatus for triggering a cell to send an SSB and/or a SIB in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The apparatus for triggering a cell to send an SSB and/or a SIB provided in this embodiment of this application can implement the processes implemented in the method embodiment in FIG. 11, with the same technical effects achieved. To avoid repetition, details are not described herein again.

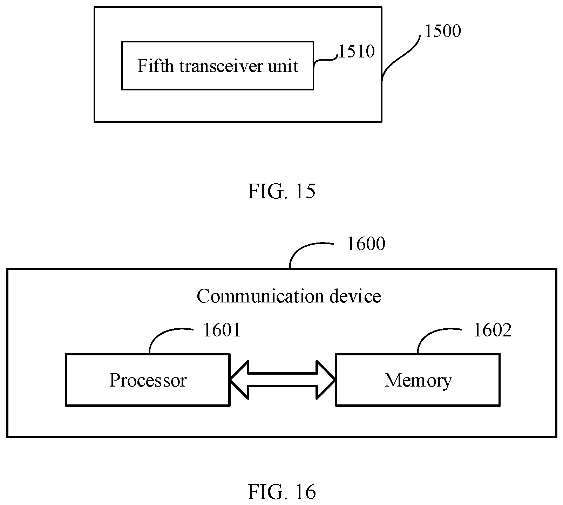

As shown in FIG. 15, an embodiment of this application provides an apparatus 1500 for triggering a cell to send an SSB and/or a SIB, applied to a first cell. The apparatus includes:
a fifth transceiver unit 1510, configured to send first information to a terminal, where the first information is used for the terminal to perform a target operation after sending a first signal to a second cell; the first signal is used for triggering the second cell to perform adaptation related to a synchronization signal block SSB and/or a system information block SIB.

Optionally, the first information includes at least one of the following:
a second-cell identifier;
the second cell supporting or not supporting on-demand SIB;
the second cell supporting or not supporting on-demand SSB;
a TDD configuration of the second cell;
a unified access control UAC configuration;
a cell barring configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal; and

Optionally, the SIB configuration of the second cell after successful triggering by the first signal includes at least one of the following:
a SIB periodicity;
a control resource set 0 configuration;
a search space 0 configuration;
a type 0 PDCCH configuration;
a SIB monitoring window;
a time length for transmitting a SIB;
the number of times for sending a SIB;
the number of periods for sending a SIB;
frequency domain information of a SIB;
time domain information of a SIB; and
a SIB sending mode.

Optionally, the SSB configuration of the second cell after successful triggering by the first signal includes at least one of the following:
a frequency for sending an SSB;
a time domain index or time domain position for sending an SSB;
an SSB monitoring window;
a time length for transmitting an SSB;
the number of times for sending an SSB;
the number of periods for sending an SSB;
a time domain relationship between a triggered SSB and an SSB of a first carrier; where the first carrier is a carrier that is used by the terminal for time-frequency reference synchronization for the second cell;
a frequency domain relationship between the triggered SSB and the SSB of the first carrier;
a spatial domain relationship between the triggered SSB and the SSB of the first carrier;
a time domain position for sending the 1st SSB; and
an SSB sending mode.

Optionally, the first signal configuration includes at least one of the following:
a configuration for monitoring feedback information of the first signal; and
a sending configuration of the first signal.

Optionally, the configuration for monitoring feedback information of the first signal includes at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

Optionally, the sending configuration of the first signal includes at least one of the following:
a signal synchronization reference configuration;
a signal type configuration;
a signal time domain resource configuration;
a signal frequency domain resource configuration;
a signal sequence configuration;
a signal power configuration; and
a signal spatial domain parameter configuration.

Optionally, the signal power configuration includes at least one of the following:
an initial signal power;
a power ramping step size of a signal power;
the number of repetitions corresponding to each signal sending; and
the maximum number of repetitions for signal transmission.

The apparatus for triggering a cell to send an SSB and/or a SIB in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The apparatus for triggering a cell to send an SSB and/or a SIB provided in this embodiment of this application can implement the processes implemented in the method embodiment in FIG. 12, with the same technical effects achieved. To avoid repetition, details are not described herein again.

As shown in FIG. 16, an embodiment of this application further provides a communication device 1600, including a processor 1601 and a memory 1602. A program or instructions capable of running on the processor 1601 are stored in the memory 1602. For example, when the communication device 1600 is a terminal and when the program or the instructions are executed by the processor 1601, the steps of the foregoing embodiments of the method for triggering a cell to send an SSB and/or a SIB executed by the terminal are implemented, with the same technical effects achieved. When the communication device 1600 is a network-side device and when the program or the instructions are executed by the processor 1601, the steps of the foregoing embodiments of the method for triggering a cell to send an SSB and/or a SIB executed by the second cell or the first cell are implemented, with the same technical effects achieved. To avoid repetition, details are not described herein again.

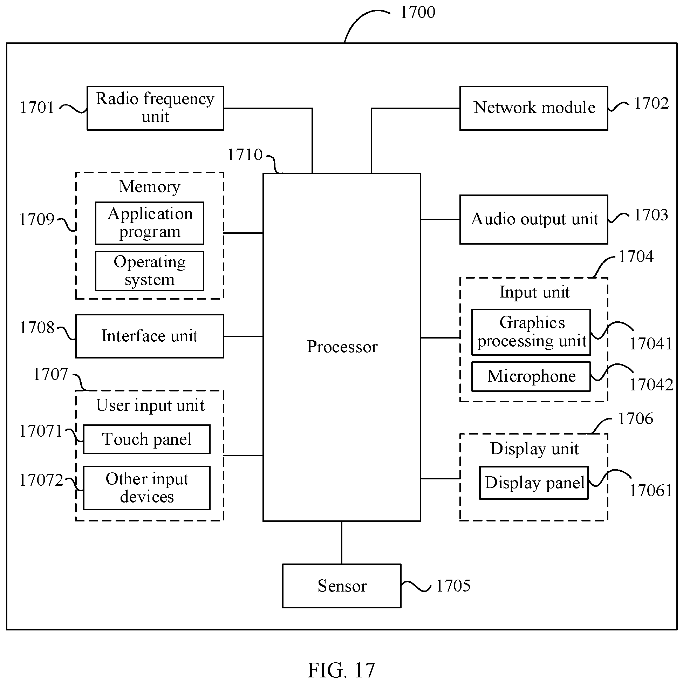

An embodiment of this application further provides a terminal, which includes a processor and a communication interface, where the communication interface is coupled to the processor, and the processor is configured to run a program or instructions to implement the steps of the method embodiments shown in FIG. 3. The terminal embodiment corresponds to the foregoing terminal side method embodiment, and the implementation processes and implementations of the foregoing method embodiments can be applied to the terminal embodiments, with the same technical effects achieved. Specifically, FIG. 17 is a schematic diagram of a hardware structure of a terminal implementing an embodiment of this application.

The terminal 1700 includes but is not limited to at least part of components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

Persons skilled in the art can understand that the terminal 1700 may further include a power supply (for example, a battery) supplying power to the components, and the power supply may be logically connected to the processor 1710 through a power management system. In this way, functions such as charge management, discharge management, and power consumption management are implemented by using the power management system. The structure of the terminal shown in FIG. 17 does not constitute any limitation on the terminal. The terminal may include more or fewer components than shown in the figure, or a combination of some components, or the components disposed differently. Details are not described herein again.

It can be understood that in this embodiment of this application, the input unit 1704 may include a graphics processing unit (Graphics Processing Unit, GPU) 17041 and a microphone 17042. The graphics processing unit 17041 processes image data of a still picture or video obtained by an image capture apparatus (such as a camera) in a video capture mode or an image capture mode. The display unit 1706 may include a display panel 17061. The display panel 17061 may be configured in a form of a liquid crystal display, an organic light-emitting diode display, or the like. The user input unit 1707 includes at least one of a touch panel 17071 and other input devices 17072. The touch panel 17071 is also referred to as a touchscreen. The touch panel 17071 may include two parts: a touch detection apparatus and a touch controller. The other input devices 17072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1701 sends the downlink data to the processor 1710 for processing; and the radio frequency unit 1701 also sends uplink data to the network-side device. Generally, the radio frequency unit 1701 includes but is not limited to an antenna, an amplifier, a transceiver, a coupler, a low noise amplifier, a duplexer, and the like.

The memory 1709 may be configured to store software programs or instructions and various data. The memory 1709 may mainly include a first storage area for storing programs or instructions and a second storage area for storing data, where the first storage area may store an operating system, an application program or instructions required by at least one function (for example, an audio playing function and an image playing function), and the like. Further, the memory 1709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1709 described in the embodiments of this application is intended to include but is not limited to these and any other suitable types of memories.

The processor 1710 may include one or more processing units. Optionally, the processor 1710 may integrate an application processor and a modem processor. The application processor primarily processes operations involving an operating system, user interface, application program, or the like. The modem processor primarily processes radio communication signals, for example, being a baseband processor. It should be understood that alternatively, the modem processor may not be integrated into the processor 1710.

The radio frequency unit 1701 is configured to send a first signal to a second cell.

The processor 1710 is configured to perform a target operation based on first information from a first cell and/or the second cell; where
the first signal is used for triggering the second cell to perform an adaptation related to a synchronization signal block SSB and/or a system information block SIB, and the first cell and the second cell are different cells; and
the target operation includes at least one of the following:
   receiving, at a first position, an SSB and/or SIB sent by the second cell, where the first position is determined based on the first information or specified by a protocol;
   receiving, in a first direction, an SSB and/or SIB sent by the second cell, where the first direction is a direction corresponding to an SSB index carried in feedback information of the first signal;
   receiving, in a second direction, an SSB and/or SIB sent by the second cell, where the second direction is a direction corresponding to an SSB associated with an occasion at which the first signal is sent;
   starting to monitor a type 0 physical downlink control channel PDCCH associated with a target SSB, where the target SSB is an SSB associated with a random access occasion RO at which the first signal is sent;
   blindly detecting scheduling information for remaining minimum system information RMSI using a system information radio network temporary identifier SI-RNTI in a type 0 common search space CSS corresponding to a control resource set 0;
   blindly detecting downlink control information DCI 1_0 in a Type 0 CSS corresponding to a control resource set 0;
   receiving feedback information of the first signal at a second position, where the second position is determined according to a configuration of the first signal or specified by a protocol;
   skipping detection of DCI scrambled by a random access RNTI;
   detecting DCI scrambled by a random access RNTI;
   resending the first signal under a first condition, where the first condition includes: the terminal does not receive, within a random access response RAR time window, a second message Msg2 for contention-based random access;
   after receiving a physical downlink shared channel PDSCH carrying a RAR message, not sending a physical uplink shared channel PUSCH transmission scheduled by an RAR uplink grant;
   after receiving Msg2, not sending a third message Msg3 for contention-based random access;
   receiving an on-demand SIB in a type 1 CSS;
   receiving an on-demand SIB in a target search space, where the target search space is a search space dedicated to receiving the on-demand SIB;
   determining validity of an RO of the second cell according to time division duplex TDD configuration information of the second cell, where the TDD configuration information is from the first cell; and
   determining a valid uplink occasion for sending the first signal according to TDD configuration information of the second cell, where the TDD configuration information is from the first cell.

Optionally, the adaptation related to the synchronization signal block SSB and/or system information block SIB includes:
adapting from not sending an SSB to sending an SSB;
adapting from not sending a SIB to sending a SIB;
adapting from sending a long-period SSB to sending a short-period SSB;
adapting from sending a long-period SIB to sending a short-period SIB; and
adapting from sending only a primary synchronization signal PSS and a secondary synchronization signal SSS to sending an SSB.

Optionally, a relationship between the first cell and the second cell includes one of the following:
the first cell and the second cell are intra-frequency cells;
the first cell and the second cell are inter-frequency cells;
the first cell and the second cell belong to a same cell group;
the first cell and the second cell belong to a same timing advance group TAG; and
the first cell and the second cell belong to a same tracking area.

Optionally, the radio frequency unit 1701 is further configured to:
obtain second information, where the second information is carried in an SSB sent by the second cell.

The processor 1710 is further configured to determine a SIB sending status of the second cell based on the second information, where the SIB sending status of the second cell includes at least one of the following:
a state of sending a SIB;
a state of not sending a SIB;
supporting an on-demand SIB mode; and
not supporting an on-demand SIB mode;

Optionally, a manner in which the SSB of the second cell carries the second information includes at least one of the following:
being indicated by a synchronization sequence included in the SSB of the second cell;
being indicated by an existing target field in a PBCH of the SSB of the second cell;
being indicated by a newly added payload in the synchronization sequence included in the SSB of the second cell;
being indicated by a newly added payload in the PBCH of the SSB of the second cell; and
being implicitly indicated by a PBCH demodulation reference signal DMRS included in the SSB of the second cell; where there is a mapping relationship between a DMRS sequence of the PBCH and a SIB or SSB sending status.

Optionally, a specific value of an existing target field in a master information block MIB carried by the PBCH has a one-to-one mapping relationship with the SIB sending status.

Optionally, the first information includes at least one of the following:
a second-cell identifier;
the second cell supporting or not supporting on-demand SIB;
the second cell supporting or not supporting on-demand SSB;
a TDD configuration of the second cell;
a unified access control UAC configuration;
a cell barring (bar) configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal; and

Optionally, the SIB configuration of the second cell after successful triggering by the first signal includes at least one of the following:
a SIB periodicity;
a control resource set 0 configuration;
a search space 0 configuration;
a type 0 PDCCH configuration;
a SIB monitoring window;
a time length for transmitting a SIB;
the number of times for sending a SIB;
the number of periods for sending a SIB;
frequency domain information of a SIB;
time domain information of a SIB; and
a SIB sending mode.

Optionally, the SIB sending mode includes at least one of the following:
a normal SIB sending mode;
a simplified SIB sending mode;
a clustered SIB sending mode; and
a long-period SIB sending mode.

Optionally, the SSB configuration of the second cell after successful triggering by the first signal includes at least one of the following:
a frequency for sending an SSB;
a time domain index or time domain position for sending an SSB;
an SSB monitoring window;
a time length for transmitting an SSB;
the number of times for sending an SSB;
the number of periods for sending an SSB;
a time domain relationship between a triggered SSB and an SSB of a first carrier; where the first carrier is a carrier capable of serving as a time-frequency reference synchronization for the second cell;
a frequency domain relationship between the triggered SSB and the SSB of the first carrier;
a spatial domain relationship between the triggered SSB and the SSB of the first carrier;
a time domain position for sending the 1st SSB; and
an SSB sending mode.

Optionally, the SSB sending mode includes at least one of the following:
a normal SSB sending mode;
a simplified SSB sending mode;
a clustered SSB sending mode; and
a long-period SSB sending mode.

Optionally, the first signal configuration includes at least one of the following:
a configuration for monitoring feedback information of the first signal; and
a sending configuration of the first signal.

Optionally, the configuration for monitoring feedback information of the first signal includes at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

Optionally, the sending configuration of the first signal includes at least one of the following:
a signal synchronization reference configuration;
a signal type configuration;
a signal time domain resource configuration;
a signal frequency domain resource configuration;
a signal sequence configuration;
a signal power configuration; and
a signal spatial domain parameter configuration.

Optionally, the signal power configuration includes at least one of the following:
an initial signal power;
a power ramping step size of a signal power;
the number of repetitions corresponding to each signal sending; and
the maximum number of repetitions for signal transmission.

Optionally, the first signal configuration is configured per cell, or is configured per cell group.

Optionally, in a case that the target operation is receiving, at the first position, the SSB and/or SIB sent by the second cell, the first position includes at least one of the following:
being X time units after sending of the first signal, where X is greater than 0;
being Y time units after receiving of the feedback information of the first signal, where Y is greater than 0;
being a time position determined based on SIB scheduling information that is monitored at a third position, where the third position is the 1st PDCCH occasion, for scheduling a SIB, closest to a time point of sending the first signal;
being a time position determined based on SIB scheduling information that is monitored at a fourth position, where the fourth position is the 1st PDCCH occasion, for scheduling SIB, closest to a time point of receiving the feedback information of the first signal;
being within a timing duration of a first timer started after sending of the first signal;
being a time after a second timer started after sending of the first signal expires;
being within a monitoring window that is enabled Z time units after sending of the first signal, where Z is greater than 0; and
being within a monitoring window enabled after receiving of the feedback information of the first signal; where
values of X, Y, and Z are configured by a network-side device, or specified by a protocol, or included in the first signal configuration;
a timing duration of the first timer and/or the second timer is configured by a network-side device, or specified by a protocol, or included in the first signal configuration;
a starting position, an ending position, and a duration of the monitoring window are configured by a network-side device, or specified by a protocol, or included in the first signal configuration.

Optionally, a value of at least one of X, Y, and Z includes: a predefined value and a target offset value; and
the target offset value is determined based on the 1st SSB or SIB of a next SSB or SIB period sent by the second cell after sending of the first signal.

Optionally, in a case that the target operation is receiving the feedback information of the first signal at the second position, the second position includes at least one of the following:
being Q time units after sending of the first signal, where a value of Q is configured by a network-side device, or specified by a protocol, or included in the first signal configuration;
being a time point after a third timer started after sending of the first signal expires;
being within a timing duration of a fourth timer started after sending of the first signal; and
being within a monitoring window started after sending of the first signal; where
a timing duration of the third timer and/or the fourth timer is configured by a network-side device, or specified by a protocol, or included in the first signal configuration; and
a starting position, an ending position, and a duration of the monitoring window are configured by a network-side device, or specified by a protocol, or included in the first signal configuration.

Optionally, a starting time point for monitoring the type 0 physical downlink control channel PDCCH includes at least one of the following:
the 1st PDCCH occasion after sending of the first signal;
the 1st PDCCH occasion being S time units after sending of the first signal, where S is greater than 0;
the 1st PDCCH occasion being T time units after receiving of the feedback information of the first signal, where T is greater than 0;
the 1st symbol of an earliest control resource set for receiving the type 0 PDCCH after sending of the first signal;
the 1st symbol of an earliest control resource set for receiving the type 0 PDCCH that is U time units after sending of the first signal, where U is greater than 0;
the 1st symbol of an earliest control resource set for receiving the type 0 PDCCH that is V time units after receiving of the feedback information of the first signal, where V is greater than 0;
a time point after a fifth timer started subsequent to sending of the first signal expires; and
a time point after receiving of the feedback information of the first signal; where
values of S, T, U, and V are configured by a network-side device, or specified by a protocol, or included in the first signal configuration; and
a timing duration of the fifth timer is configured by a network-side device, or specified by a protocol, or included in the first signal configuration.

Optionally, the radio frequency unit 1701 is specifically configured to:
send the first signal to the second cell based on a second condition; where
the second condition includes at least one of the following:
   cell selection is performed;
   cell reselection is performed;
   after cell selection or cell reselection has been performed, the terminal needs to access the second cell, the second cell is a cell supporting on-demand SIB, and the terminal has received the first signal configuration for triggering the second cell to send a SIB;
   the terminal has received the first signal configuration for triggering the second cell to send a SIB;
   the terminal has received the first signal configuration for triggering the second cell to send a SIB, and the second cell supports on-demand SIB sending;
   the terminal has received the first signal configuration for triggering the second cell to send a SIB, and the second cell is configured as barred;
   the terminal has received the first signal configuration for triggering the second cell to send a SIB, the second cell is configured as barred, and the terminal needs to access the second cell;
   the terminal has received the first signal configuration for triggering the second cell to send a SIB, and the terminal is not allowed to camp on a current cell;
   the terminal has received the first signal configuration for triggering the second cell to send a SIB, the terminal is not allowed to camp on a current cell, and the second cell is a suitable cell;
   the terminal has received the first signal configuration for triggering the second cell to send a SIB, and the terminal needs to send a physical random access channel PRACH on the second cell;
   the terminal has received the first signal configuration for triggering the second cell to send a SIB, and the first information or second information indicates that the second cell is in a state of barring the terminal from camping;
   the first cell does not satisfy a camping condition, and the terminal has received the first signal configuration for triggering the second cell to send a SIB;
   the terminal initiates random access; and
   the terminal determines that the first cell is not allowed for camping, and the second cell is a suitable cell.

Optionally, the radio frequency unit 1701 is specifically configured to:
send the first signal to the second cell on a target resource; where
the target resource includes at least one of the following:
   a resource for random access in the second cell;
   part of occasions in a resource for random access in the second cell;
   one occasion in a resource for random access in the second cell; and
   a resource only for sending the first signal, and not a resource for random access in the second cell; where
   the target resource is carried in the first information, or specified by a protocol.

Optionally, the radio frequency unit 1701 is specifically configured to perform at least one of the following:
selecting, based on a reference signal measurement result of the second cell; an RO corresponding to an SSB and sending the first signal;
sending the first signal on a time domain resource dedicated to sending the first signal;
sending the first signal on a frequency domain resource dedicated to sending the first signal; and
sending the first signal on an RO associated with a target SSB index, where the target SSB index is configured by a network-side device, or specified by a protocol, or included in the first signal configuration.

Optionally, the feedback information of the first signal includes at least one of the following:
a simplified Msg2, where the simplified Msg2 includes a random access preamble identifier RAPID;
an SSB index;
a RAPID;
SIB direction information;
first indication information, used for indicating that the terminal does not need to resend the first signal, where the first indication information is DCI or a media access control control element (MAC CE);
a PDSCH carrying a SIB after successful triggering; and
a type 0 PDCCH common search space.

Optionally, a receiving direction of the feedback information of the first signal includes at least one of the following:
a direction of an SSB associated with an occasion at which the terminal sends the first signal;
a direction of one or more adjacent SSBs of the SSB associated with the occasion at which the terminal sends the first signal; and
all directions.

Optionally, in a case that the terminal receives the SIB sent by the second cell, a receiving direction of a PDCCH of the SIB and/or a receiving direction of the SIB includes at least one of the following:
a direction of an SSB associated with an occasion at which the terminal sends the first signal;
a direction of one or more adjacent SSBs of the SSB associated with the occasion at which the terminal sends the first signal; and
all directions.

Optionally, the SIB includes SIB1.

It can be understood that for the implementation processes of the implementations mentioned in this embodiment, reference may be made to the related descriptions of the embodiments of the method for triggering a cell to send an SSB and/or a SIB, with the same or corresponding technical effects achieved. To avoid repetition, details are not described herein again.

An embodiment of this application further provides a network-side device, where the network-side device may be a second cell or a first cell. The network-side device includes a processor and a communication interface, where the communication interface is coupled to the processor, and the processor is configured to run a program or instructions to implement the steps of the method embodiments shown in FIG. 11 or FIG. 12. The network-side device embodiment corresponds to the foregoing network-side device method embodiment, and the implementation processes and implementations of the foregoing method embodiments can be applied to the network-side device embodiment, with the same technical effects achieved.

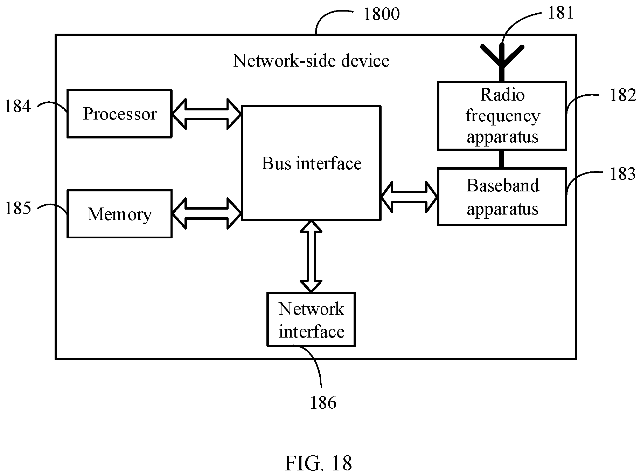

Specifically, an embodiment of this application further provides a network-side device, where the network-side device may be a second cell or a first cell. As shown in FIG. 18, the network-side device 1800 includes an antenna 181, a radio frequency apparatus 182, a baseband apparatus 183, a processor 184, and memory 185. The antenna 181 is connected to the radio frequency apparatus 182. In an uplink direction, the radio frequency apparatus 182 receives information by using the antenna 181, and sends the received information to the baseband apparatus 183 for processing. Downlink, the baseband apparatus 183 processes to-be-sent information, and sends the information to the radio frequency apparatus 182; and the radio frequency apparatus 182 processes the received information and then sends the information out through the antenna 181.

The method executed by the network-side device in the foregoing embodiments may be implemented on the baseband apparatus 183. The baseband apparatus 183 includes a baseband processor.

The baseband apparatus 183 may include, for example, at least one baseband board, where a plurality of chips are disposed on the baseband board. As shown in FIG. 18, one of the chips is, for example, the baseband processor, and connected to the memory 185 through a bus interface, to invoke the program in the memory 185 to perform the operations of the network device shown in the foregoing method embodiment.

The network-side device may further include a network interface 186, where the interface is, for example, a common public radio interface (Common Public Radio Interface, CPRI).

Specifically, the network-side device 1800 in this embodiment of this application further includes: instructions or a program stored in the memory 185 and capable of running on the processor 184. The processor 184 invokes the instructions or program in the memory 185 to execute the method executed by the modules shown in FIG. 14 or FIG. 15, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method for triggering a cell to send an SSB and/or a SIB are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface. The communication interface is coupled to the processor, and the processor is configured to run a program or instructions to implement the processes of the foregoing embodiments of the method for triggering a cell to send an SSB and/or a SIB, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the method for triggering a cell to send an SSB and/or a SIB, with the same technical effects achieved. To avoid repetition, details are not repeated herein.

An embodiment of this application further provides a communication system, including a terminal and a network-side device, where the terminal can be configured to execute the steps of the method for triggering a cell to send an SSB and/or a SIB executed by the terminal, and the network-side device can be configured to execute the steps of the method for triggering a cell to send an SSB and/or a SIB executed by the second cell or the first cell.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a ..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. A method for triggering a cell to send an SSB and/or a SIB, comprising:
sending, by a terminal, a first signal to a second cell; and
performing, by the terminal, a target operation based on first information from a first cell and/or the second cell; wherein
the first signal is used for triggering the second cell to perform an adaptation related to a synchronization signal block SSB and/or a system information block SIB, and the first cell and the second cell are different cells; and
the target operation comprises at least one of the following:
receiving, at a first position, an SSB and/or SIB sent by the second cell, wherein the first position is determined based on the first information or specified by a protocol;
receiving, in a first direction, an SSB and/or SIB sent by the second cell, wherein the first direction is a direction corresponding to an SSB index carried in feedback information of the first signal;
receiving, in a second direction, an SSB and/or SIB sent by the second cell, wherein the second direction is a direction corresponding to an SSB associated with an occasion at which the first signal is sent;
starting to monitor a type 0 physical downlink control channel PDCCH associated with a target SSB, wherein the target SSB is an SSB associated with a random access occasion RO at which the first signal is sent;
blindly detecting scheduling information for remaining minimum system information RMSI using a system information radio network temporary identifier SI-RNTI in a type 0 common search space CSS corresponding to a control resource set 0;
blindly detecting downlink control information DCI 1_0 in a Type 0 CSS corresponding to a control resource set 0;
receiving feedback information of the first signal at a second position, wherein the second position is determined according to a configuration of the first signal or specified by a protocol;
skipping detection of DCI scrambled by a random access RNTI;
detecting DCI scrambled by a random access RNTI;
resending the first signal under a first condition, wherein the first condition comprises: the terminal does not receive, within a random access response RAR time window, a second message Msg2 for contention-based random access;
after receiving a physical downlink shared channel PDSCH carrying a RAR message, not sending a physical uplink shared channel PUSCH transmission scheduled by an RAR uplink grant;
after receiving Msg2, not sending a third message Msg3 for contention-based random access;
receiving an on-demand SIB in a type 1 CSS;
receiving an on-demand SIB in a target search space, wherein the target search space is a search space dedicated to receiving the on-demand SIB;
determining validity of an RO of the second cell according to time division duplex TDD configuration information of the second cell, wherein the TDD configuration information is from the first cell; and
determining a valid uplink occasion for sending the first signal according to TDD configuration information of the second cell, wherein the TDD configuration information is from the first cell.

2. The method according to claim 1, wherein the adaptation related to the synchronization signal block SSB and/or system information block SIB comprises:
adapting from not sending an SSB to sending an SSB;
adapting from not sending a SIB to sending a SIB;
adapting from sending a long-period SSB to sending a short-period SSB;
adapting from sending a long-period SIB to sending a short-period SIB; and
adapting from sending only a primary synchronization signal PSS and a secondary synchronization signal SSS to sending an SSB.

3. The method according to claim 1, wherein a relationship between the first cell and the second cell comprises one of the following:
the first cell and the second cell are intra-frequency cells;
the first cell and the second cell are inter-frequency cells;
the first cell and the second cell belong to a same cell group;
the first cell and the second cell belong to a same timing advance group TAG; and
the first cell and the second cell belong to a same tracking area.

4. The method according to claim 1, wherein before the performing a target operation, the method further comprises:
obtaining second information, wherein the second information is carried in an SSB sent by the second cell; and
determining a SIB sending status of the second cell based on the second information, wherein the SIB sending status of the second cell comprises at least one of the following:
a state of sending a SIB;
a state of not sending a SIB;
supporting an on-demand SIB mode; and
not supporting an on-demand SIB mode.

5. The method according to claim 4, wherein a manner in which the SSB of the second cell carries the second information comprises at least one of the following:
being indicated by a synchronization sequence comprised in the SSB of the second cell;
being indicated by an existing target field in a PBCH of the SSB of the second cell;
being indicated by a newly added payload in the synchronization sequence comprised in the SSB of the second cell;
being indicated by a newly added payload in the PBCH of the SSB of the second cell; and
being implicitly indicated by a PBCH demodulation reference signal DMRS comprised in the SSB of the second cell; wherein there is a mapping relationship between a DMRS sequence of the PBCH and a SIB or SSB sending status.

6. The method according to claim 5, wherein a specific value of an existing target field in a master information block MIB carried by the PBCH has a one-to-one mapping relationship with the SIB sending status.

7. The method according to claim 1, wherein the first information comprises at least one of the following:
a second-cell identifier;
the second cell supporting or not supporting on-demand SIB;
the second cell supporting or not supporting on-demand SSB;
a TDD configuration of the second cell;
a unified access control UAC configuration;
a cell barring (bar) configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal.

8. The method according to claim 7, wherein the SIB configuration of the second cell after successful triggering by the first signal comprises at least one of the following:
SIB periodicity;
a control resource set 0 configuration;
a search space 0 configuration;
a type 0 PDCCH configuration;
a SIB monitoring window;
a time length for transmitting a SIB;
the number of times for sending a SIB;
the number of periods for sending a SIB;
frequency domain information of a SIB;
time domain information of a SIB; and
a SIB sending mode.

9. The method according to claim 8, wherein the SIB sending mode comprises at least one of the following:
a normal SIB sending mode;
a simplified SIB sending mode;
a clustered SIB sending mode; and
a long-period SIB sending mode.

10. The method according to claim 7, wherein the SSB configuration of the second cell after successful triggering by the first signal comprises at least one of the following:
a frequency for sending an SSB;
a time domain index or time domain position for sending an SSB;
an SSB monitoring window;
a time length for transmitting an SSB;
the number of times for sending an SSB;
the number of periods for sending an SSB;
a time domain relationship between a triggered SSB and an SSB of a first carrier; wherein the first carrier is a carrier capable of serving as a time-frequency reference synchronization for the second cell;
a frequency domain relationship between the triggered SSB and the SSB of the first carrier;
a spatial domain relationship between the triggered SSB and the SSB of the first carrier;
a time domain position for sending the 1st SSB; and
an SSB sending mode.

11. The method according to claim 10, wherein the SSB sending mode comprises at least one of the following:
a normal SSB sending mode;
a simplified SSB sending mode;
a clustered SSB sending mode; and
a long-period SSB sending mode.

12. The method according to claim 7, wherein the first signal configuration comprises at least one of the following:
a configuration for monitoring feedback information of the first signal; and
a sending configuration of the first signal.

13. The method according to claim 12, wherein the configuration for monitoring feedback information of the first signal comprises at least one of the following:
a control resource set configuration for monitoring feedback information of the first signal;
a search space configuration for monitoring feedback information of the first signal;
a PDCCH configuration for monitoring feedback information of the first signal;
a time window for monitoring feedback information of the first signal; and
a starting position for monitoring feedback information of the first signal.

14. The method according to claim 12, wherein the sending configuration of the first signal comprises at least one of the following:
a signal synchronization reference configuration;
a signal type configuration;
a signal time domain resource configuration;
a signal frequency domain resource configuration;
a signal sequence configuration;
a signal power configuration; and
a signal spatial domain parameter configuration.

15. The method according to claim 14, wherein the signal power configuration comprises at least one of the following:
an initial signal power;
a power ramping step size of a signal power;
the number of repetitions corresponding to each signal sending; and
the maximum number of repetitions for signal transmission.

16. The method according to any one of claims 7, and 12 to 15, wherein the first signal configuration is configured per cell, or is configured per cell group.

17. The method according to claim 1, wherein in a case that the target operation is receiving, at the first position, the SSB and/or SIB sent by the second cell, the first position comprises at least one of the following:
being X time units after sending of the first signal, wherein X is greater than 0;
being Y time units after receiving of the feedback information of the first signal, wherein Y is greater than 0;
being a time position determined based on SIB scheduling information that is monitored at a third position, wherein the third position is the 1st PDCCH occasion, for scheduling a SIB, closest to a time point of sending the first signal;
being a time position determined based on SIB scheduling information that is monitored at a fourth position, wherein the fourth position is the 1st PDCCH occasion, for scheduling SIB, closest to a time point of receiving the feedback information of the first signal;
being within a timing duration of a first timer started after sending of the first signal;
being a time after a second timer started after sending of the first signal expires;
being within a monitoring window that is enabled Z time units after sending of the first signal, wherein Z is greater than 0; and
being within a monitoring window enabled after receiving of the feedback information of the first signal; wherein
values of X, Y, and Z are configured by a network-side device, or specified by a protocol, or comprised in the first signal configuration;
a timing duration of the first timer and/or the second timer is configured by a network-side device, or specified by a protocol, or comprised in the first signal configuration;
a starting position, an ending position, and a duration of the monitoring window are configured by a network-side device, or specified by a protocol, or comprised in the first signal configuration;
a value of at least one of X, Y, and Z comprises: a predefined value and a target offset value; and
the target offset value is determined based on the 1st SSB or SIB of a next SSB or SIB period sent by the second cell after sending of the first signal.

18. The method according to claim 1, wherein in a case that the target operation is receiving the feedback information of the first signal at the second position, the second position comprises at least one of the following:
being Q time units after sending of the first signal, wherein a value of Q is configured by a network-side device, or specified by a protocol, or comprised in the first signal configuration;
being a time point after a third timer started after sending of the first signal expires;
being within a timing duration of a fourth timer started after sending of the first signal; and
being within a monitoring window started after sending of the first signal; wherein
a timing duration of the third timer and/or the fourth timer is configured by a network-side device, or specified by a protocol, or comprised in the first signal configuration; and
a starting position, an ending position, and a duration of the monitoring window are configured by a network-side device, or specified by a protocol, or comprised in the first signal configuration.

19. The method according to claim 1, wherein a starting time point for monitoring the type 0 physical downlink control channel PDCCH comprises at least one of the following:
the 1st PDCCH occasion after sending of the first signal;
the 1st PDCCH occasion being S time units after sending of the first signal, wherein S is greater than 0;
the 1st PDCCH occasion being T time units after receiving of the feedback information of the first signal, wherein T is greater than 0;
the 1st symbol of an earliest control resource set for receiving the type 0 PDCCH after sending of the first signal;
the 1st symbol of an earliest control resource set for receiving the type 0 PDCCH that is U time units after sending of the first signal, wherein U is greater than 0;
the 1st symbol of an earliest control resource set for receiving the type 0 PDCCH that is V time units after receiving of the feedback information of the first signal, wherein V is greater than 0;
a time point after a fifth timer started subsequent to sending of the first signal expires; and
a time point after receiving of the feedback information of the first signal; wherein
values of S, T, U, and V are configured by a network-side device, or specified by a protocol, or comprised in the first signal configuration; and
a timing duration of the fifth timer is configured by a network-side device, or specified by a protocol, or comprised in the first signal configuration.

20. The method according to claim 1, wherein the sending a first signal to a second cell comprises:
send the first signal to the second cell based on a second condition; wherein
the second condition comprises at least one of the following:
cell selection is performed;
cell reselection is performed;
after cell selection or cell reselection has been performed, the terminal needs to access the second cell, the second cell is a cell supporting on-demand SIB, and the terminal has received the first signal configuration for triggering the second cell to send a SIB;
the terminal has received the first signal configuration for triggering the second cell to send a SIB;
the terminal has received the first signal configuration for triggering the second cell to send a SIB, and the second cell supports on-demand SIB sending;
the terminal has received the first signal configuration for triggering the second cell to send a SIB, and the second cell is configured as barred;
the terminal has received the first signal configuration for triggering the second cell to send a SIB, the second cell is configured as barred, and the terminal needs to access the second cell;
the terminal has received the first signal configuration for triggering the second cell to send a SIB, and the terminal is not allowed to camp on a current cell;
the terminal has received the first signal configuration for triggering the second cell to send a SIB, the terminal is not allowed to camp on a current cell, and the second cell is a suitable cell;
the terminal has received the first signal configuration for triggering the second cell to send a SIB, and the terminal needs to send a physical random access channel PRACH on the second cell;
the terminal has received the first signal configuration for triggering the second cell to send a SIB, and the first information or second information indicates that the second cell is in a state of barring the terminal from camping;
the first cell does not satisfy a camping condition, and the terminal has received the first signal configuration for triggering the second cell to send a SIB;
the terminal initiates random access; and
the terminal determines that the first cell is not allowed for camping, and the second cell is a suitable cell.

21. The method according to claim 1, wherein the sending a first signal to a second cell comprises:
sending the first signal to the second cell on a target resource; wherein
the target resource comprises at least one of the following:
a resource for random access in the second cell;
part of occasions in a resource for random access in the second cell;
one occasion in a resource for random access in the second cell; and
a resource only for sending the first signal, and not a resource for random access in the second cell; wherein
the target resource is carried in the first information, or specified by a protocol.

22. The method according to claim 1, wherein the sending a first signal to a second cell comprises at least one of the following:
selecting, based on a reference signal measurement result of the second cell; an RO corresponding to an SSB and sending the first signal;
sending the first signal on a time domain resource dedicated to sending the first signal;
sending the first signal on a frequency domain resource dedicated to sending the first signal; and
sending the first signal on an RO associated with a target SSB index, wherein the target SSB index is configured by a network-side device, or specified by a protocol, or comprised in the first signal configuration.

23. The method according to claim 1, wherein the feedback information of the first signal comprises at least one of the following:
a simplified Msg2, wherein the simplified Msg2 comprises a random access preamble identifier RAPID;
an SSB index;
a RAPID;
SIB direction information;
first indication information, used for indicating that the terminal does not need to resend the first signal, wherein the first indication information is DCI or a media access control control element (MAC CE);
a PDSCH carrying a SIB after successful triggering; and
a type 0 PDCCH common search space.

24. The method according to claim 1, wherein a receiving direction of the feedback information of the first signal comprises at least one of the following:
a direction of an SSB associated with an occasion at which the terminal sends the first signal;
a direction of one or more adjacent SSBs of the SSB associated with the occasion at which the terminal sends the first signal; and
all directions; wherein
in a case that the terminal receives the SIB sent by the second cell, a receiving direction of a PDCCH of the SIB and/or a receiving direction of the SIB comprises at least one of the following:
a direction of an SSB associated with an occasion at which the terminal sends the first signal;
a direction of one or more adjacent SSBs of the SSB associated with the occasion at which the terminal sends the first signal; and
all directions.

25. A method for triggering a cell to send an SSB and/or a SIB, comprising:
receiving, by a second cell, a first signal sent by a terminal; wherein the first signal is used for triggering the second cell to perform adaptation related to an SSB and/or a SIB; and
performing, by the second cell, adaptation related to the SSB and/or the SIB.

26. The method according to claim 25, wherein after the receiving a first signal sent by a terminal, the method further comprises:
sending feedback information of the first signal to the terminal.

27. The method according to claim 25, wherein the method further comprises:
sending first information to the terminal, wherein the first information is used for the terminal to perform a target operation after sending the first signal to the second cell; wherein
the first information comprises at least one of the following:
a second-cell identifier;
the second cell supporting or not supporting on-demand SIB;
the second cell supporting or not supporting on-demand SSB sending;
a TDD configuration of the second cell;
a unified access control UAC configuration;
a cell barring (bar) configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal.

28. The method according to claim 25, wherein the receiving a first signal sent by a terminal comprises:
receiving, on a target resource, the first signal sent by the terminal; wherein
the target resource comprises at least one of the following:
a resource for random access in the second cell;
part of occasions in a resource for random access in the second cell;
one occasion in a resource for random access in the second cell; and
a resource only for receiving the first signal, and not a resource for random access in the second cell.

29. The method according to claim 25, wherein in a case of sending a SIB to the terminal, a sending direction of a PDCCH of the SIB and/or a sending direction of the SIB comprises at least one of the following:
a direction of an SSB associated with an occasion at which the terminal sends the first signal;
a direction of one or more adjacent SSBs of the SSB associated with the occasion at which the terminal sends the first signal; and
all directions.

30. The method according to claim 25, wherein the performing adaptation related to the SSB and/or the SIB comprises:
adapting from not sending an SSB to sending an SSB;
adapting from not sending a SIB to sending a SIB;
adapting from sending a long-period SSB to sending a short-period SSB;
adapting from sending a long-period SIB to sending a short-period SIB; and
adapting from sending only a PSS and an SSS to sending a normal SSB.

31. A method for triggering a cell to send an SSB and/or a SIB, comprising:
sending, by a first cell, first information to a terminal, wherein the first information is used for the terminal to perform a target operation after sending a first signal to a second cell; and the first signal is used for triggering the second cell to perform adaptation related to a synchronization signal block SSB and/or a system information block SIB.

32. The method according to claim 31, wherein the first information comprises at least one of the following:
a second-cell identifier;
the second cell supporting or not supporting on-demand SIB;
the second cell supporting or not supporting on-demand SSB;
a TDD configuration of the second cell;
a unified access control UAC configuration;
a cell barring configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal.

33. An apparatus for triggering a cell to send an SSB and/or a SIB, comprising:
a first transceiver unit, configured to send a first signal to a second cell; and
a first processing unit, configured to perform a target operation based on first information from a first cell and/or the second cell; wherein
the first signal is used for triggering the second cell to perform an adaptation related to an SSB and/or a SIB, and the first cell and the second cell are different cells; and
the target operation comprises at least one of the following:
receiving, at a first position, an SSB and/or SIB sent by the second cell, wherein the first position is determined based on the first information or specified by a protocol;
receiving, in a first direction, an SSB and/or SIB sent by the second cell, wherein the first direction is a direction corresponding to an SSB index carried in feedback information of the first signal;
receiving, in a second direction, an SSB and/or SIB sent by the second cell, wherein the second direction is a direction corresponding to an SSB associated with an occasion at which the first signal is sent;
starting to monitor a type 0 PDCCH associated with a target SSB, wherein the target SSB is an SSB associated with a RO at which the first signal is sent;
blindly detecting scheduling information for RMSI using a SI-RNTI in a Type 0 CSS corresponding to a control resource set 0;
blindly detecting DCI 1_0 in a Type 0 CSS corresponding to a control resource set 0;
receiving feedback information of the first signal at a second position, wherein the second position is determined according to a configuration of the first signal or specified by a protocol;
skipping detection of DCI scrambled by a random access RNTI;
detecting DCI scrambled by a random access RNTI;
resending the first signal under a first condition, wherein the first condition comprises: the terminal does not receive, within a RAR time window, a second message Msg2 for contention-based random access;
after receiving a PDSCH carrying a RAR message, not sending a PUSCH transmission scheduled by an RAR uplink grant;
after receiving Msg2, not sending a third message Msg3 for contention-based random access;
receiving an on-demand SIB in a type 1 CSS;
receiving an on-demand SIB in a target search space, wherein the target search space is a search space dedicated to receiving the on-demand SIB;
determining validity of an RO of the second cell according to time division duplex TDD configuration information of the second cell, wherein the TDD configuration information is from the first cell; and
determining a valid uplink occasion for sending the first signal according to TDD configuration information of the second cell, wherein the TDD configuration information is from the first cell.

34. The apparatus according to claim 33, wherein the adaptation related to the SSB and/or the SIB comprises:
adapting from not sending an SSB to sending an SSB;
adapting from not sending a SIB to sending a SIB;
adapting from sending a long-period SSB to sending a short-period SSB;
adapting from sending a long-period SIB to sending a short-period SIB; and
adapting from sending only a PSS and an SSS to sending an SSB.

35. The apparatus according to claim 33, wherein the apparatus further comprises:
a first obtaining unit, configured to obtain second information, wherein the second information is carried in an SSB sent by the second cell; and
a first determining unit, configured to determine a SIB sending status of the second cell based on the second information, wherein the SIB sending status of the second cell comprises at least one of the following:
a state of sending a SIB;
a state of not sending a SIB;
supporting an on-demand SIB mode; and
not supporting an on-demand SIB mode.

36. The apparatus according to claim 33, wherein the first transceiver unit is specifically configured to:
send the first signal to the second cell based on a second condition; wherein
the second condition comprises at least one of the following:
cell selection is performed;
cell reselection is performed;
after cell selection or cell reselection has been performed, the terminal needs to access the second cell, the second cell is a cell supporting on-demand SIB, and the terminal has received the first signal configuration for triggering the second cell to send a SIB;
the terminal has received the first signal configuration for triggering the second cell to send a SIB;
the terminal has received the first signal configuration for triggering the second cell to send a SIB, and the second cell supports on-demand SIB sending;
the terminal has received the first signal configuration for triggering the second cell to send a SIB, and the second cell is configured as barred;
the terminal has received the first signal configuration for triggering the second cell to send a SIB, the second cell is configured as barred, and the terminal needs to access the second cell;
the terminal has received the first signal configuration for triggering the second cell to send a SIB, and the terminal is not allowed to camp on a current cell;
the terminal has received the first signal configuration for triggering the second cell to send a SIB, the terminal is not allowed to camp on a current cell, and the second cell is a suitable cell;
the terminal has received the first signal configuration for triggering the second cell to send a SIB, and the terminal needs to send a physical random access channel PRACH on the second cell;
the terminal has received the first signal configuration for triggering the second cell to send a SIB, and the first information or second information indicates that the second cell is in a state of barring the terminal from camping;
the first cell does not satisfy a camping condition, and the terminal has received the first signal configuration for triggering the second cell to send a SIB;
the terminal initiates random access; and
the terminal determines that the first cell is not allowed for camping, and the second cell is a suitable cell.

37. The apparatus according to claim 33, wherein the first transceiver unit is specifically configured to:
send the first signal to the second cell on a target resource; wherein
the target resource comprises at least one of the following:
a resource for random access in the second cell;
part of occasions in a resource for random access in the second cell;
one occasion in a resource for random access in the second cell; and
a resource only for sending the first signal, and not a resource for random access in the second cell; wherein
the target resource is carried in the first information, or specified by a protocol.

38. An apparatus for triggering a cell to send an SSB and/or a SIB, comprising:
a second transceiver unit, configured to receive a first signal sent by a terminal; wherein the first signal is used for triggering the second cell to perform adaptation related to an SSB and/or a SIB; and
a second processing unit, configured to perform adaptation related to the SSB and/or the SIB.

39. The apparatus according to claim 38, wherein the apparatus further comprises:
a third transceiver unit, configured to send feedback information of the first signal to the terminal.

40. The apparatus according to claim 38, wherein the apparatus further comprises:
a fourth transceiver unit, configured to send first information to the terminal, wherein the first information is used for the terminal to perform a target operation after sending the first signal to the second cell; wherein
the first information comprises at least one of the following:
a second-cell identifier;
the second cell supporting or not supporting on-demand SIB;
the second cell supporting or not supporting on-demand SSB;
a TDD configuration of the second cell;
a unified access control UAC configuration;
a cell barring (bar) configuration;
a first signal configuration for triggering SSB sending;
a first signal configuration for triggering SSB adaptation;
a first signal configuration for triggering SIB sending;
a first signal configuration for triggering SIB adaptation;
triggering condition information of a first signal;
a SIB configuration of the second cell after successful triggering by the first signal; and
an SSB configuration of the second cell after successful triggering by the first signal.

41. The apparatus according to claim 38, wherein the second transceiver unit is specifically configured to:
receive, on a target resource, the first signal sent by the terminal; wherein
the target resource comprises at least one of the following:
a resource for random access in the second cell;
part of occasions in a resource for random access in the second cell;
one occasion in a resource for random access in the second cell; and
a resource only for receiving the first signal, and not a resource for random access in the second cell.

42. An apparatus for triggering a cell to send an SSB and/or a SIB, comprising:
a fifth transceiver unit, configured to send first information to a terminal, wherein the first information is used for the terminal to perform a target operation after sending a first signal to a second cell; the first signal is used for triggering the second cell to perform adaptation related to a synchronization signal block SSB and/or a system information block SIB.

43. A terminal, comprising a processor and a memory, wherein the memory stores a program or instructions capable of running on the processor, and when the program or instructions are executed by the processor, the steps of the method for triggering a cell to send an SSB and/or a SIB according to any one of claims 1 to 27 are implemented.

44. A network-side device, comprising a processor and a memory, wherein a program or instructions capable of running on the processor are stored in the memory, and when the program or instructions are executed by the processor, the steps of the method for triggering a cell to send an SSB and/or a SIB according to any one of claims 28 to 43 are implemented; or the steps of the method for triggering a cell to send an SSB and/or a SIB according to any one of claims 44 to 51 are implemented.

45. A readable storage medium, wherein the readable storage medium stores a program or instructions, and when the program or instructions are executed by a processor, the steps of the method for triggering a cell to send an SSB and/or a SIB according to any one of claims 1 to 24 are implemented; the steps of the method for triggering a cell to send an SSB and/or a SIB according to any one of claims 25 to 30 are implemented; or the steps of the method for triggering a cell to send an SSB and/or a SIB according to any one of claims 31 and 32 are implemented.
